# EUROPEAN PATENT APPLICATION

(11) **EP 2 293 415 A1**
(43) Date of publication of application: **09.03.2011**
(21) Application number: 09758425.4
(22) Date of filing: 05.06.2009
(51) Int. Cl.: H02K 1/18

(54) **ARMATURE CORE**

(30) Priority: 06.06.2008 JP 2008149643; 01.06.2009 JP 2009131963
(71) Applicant: Daikin Industries, Ltd., Osaka 530-8323 (JP)
(72) Inventor: ASANO Yoshinari, Kusatsu-shi Shiga 525-8526 (JP); KIFUJI Nobuyuki, Kusatsu-shi Shiga 525-8526 (JP); KIKUNO Tomonori, Sakai-shi Osaka 591-8511 (JP)
(74) Representative: HOFFMANN EITLE
(86) International application number: PCT/JP2009/060371
(87) International publication number: WO 2009/148158

(57) **Abstract**

The present invention relates to an armature core capable of reducing welding steps in welding teeth including a plurality of magnetic bodies to a yoke. An armature core (1) includes a back yoke (11) and teeth (12). The teeth (12) include a plurality of magnetic plates (121) laminated along a lamination direction (D2). The back yoke (11) includes holes (112) through which the teeth (12) are inserted. The holes (112) penetrate through a pair of surfaces (11a, 11b) of the back yoke (11). The back yoke (11) and the plurality of magnetic plates (121) are welded to each other at a point at which an edge of a boundary between the adjacent magnetic plates and a surface (11c) forming the hole (112) are close to each other and any one of the pair of surfaces (11a, 11b) is exposed.

## Description

### Technical Field

The present invention relates to an armature core, and particularly, to fixing of teeth including a plurality of laminated magnetic plates and a yoke.

### Background Art

Patent Document 1 describes the technology of firmly fixing the teeth to the yoke by press-fitting or welding and the technology of integrally fixing the teeth and the yoke by a molding resin.

Further, Patent Document 2 discloses the technology related to the present invention.

### Prior Art Document

### Patent Document

Patent Document 1: Japanese Patent Application Laid-Open No. 2007-28855
Patent Document 2: Japanese Patent Application Laid-Open No. 2007-28854

### Disclosure of Invention

### Problems to be Solved by the Invention

In Patent Document 1, detailed description is not given of a case where the teeth include a plurality of magnetic plates (for example, laminated steel plates) that are laminated in a predetermined direction and are fixed to the yoke by welding. In general, it is conceivable that a plurality of magnetic plates are welded to produce teeth, and then the teeth and the yoke are fixed by welding.

However, welding typically tends to generate distortions, and hence welding steps are desired to be reduced in welding the teeth including a plurality of magnetic plates to the yoke.

An object of the present invention is therefore to provide an armature core that reduces welding steps in welding teeth including a plurality of magnetic plates to a yoke.

### Means to Solve the Problem

According to a first aspect of the present invention, an armature core includes: a first magnetic body (11; 11+ 33) including: a first surface (11a; 11a) and a second surface (11b; 13b) facing each other in a first direction (D1) parallel to a predetermined axis (P); and a third surface (11c; 11c+13c) forming a plurality of holes (112, 112+132) penetrating through said first surface and said second surface in said first direction and circularly arranged around said axis; and a plurality of second magnetic bodies (12) each including N magnetic plates (121) laminated in a second direction (D2) perpendicular to said axis and respectively inserted through said plurality of holes, wherein, at at least one k-th point (40, 42) at which an edge of a boundary surface (122) between k-th and (k+1)th ones of said magnetic plates adjacent to each other in said second direction, where k represents a natural number between 1 and N-1, and said third surface are close to each other and are exposed on any one side of said first surface and said second surface, said k-th and said (k+1)th ones of said magnetic plates and said first magnetic body are welded to each other.

According to a second aspect of the armature core of the present invention, in the armature core according to the first aspect, each of the plurality of second magnetic bodies (12) includes an extending part (121 a) extending on a side opposite to the second surface (11b) from the hole (112) on the first surface (11a) side along the first direction (D1).

According to a third aspect of the armature core of the present invention, in the armature core according to the second aspect, the at least one k-th point (40) is positioned at an end on the second surface (11b) side of a point at which the edge of the boundary surface (122) and the third surface (11c) are close to each other.

According to a fourth aspect of the armature core of the present invention, in the armature core according to the second aspect, the at least one k-th point (42) is positioned at an end on the first surface (11a) side of the point at which the edge of the boundary surface (122) and the third surface (11c) are close to each other.

According to a fifth aspect of the armature core of the present invention, in the armature core according to any one of the first to fourth aspects: the first magnetic body (11) includes a plurality of second magnetic plates (111; 111+131) laminated in the first direction (D1) and form the first surface to the third surface (11a, 11b, 11c; 11a, 13 a, 11c+13c) in a state in which the plurality of second magnetic plates are respectively laminated; and the at least one k-th point includes two k-th points, where one of the two k-th points (42) is positioned in the second magnetic plate forming the first surface and the other of the two k-th points (40) is positioned in the second magnetic plate forming the second surface.

According to a sixth aspect of the armature core of the present invention, in the armature core according to any one of the second to fifth aspects: the first magnetic body (11) includes a plurality of second magnetic plates (111; 111+131) laminated in the first direction (D1) and form the first surface to the third surface (11a, 11b, 11c; 11a, 13a, 11c+13c) in a state in which the plurality of second magnetic plates are respectively laminated; the extending part (121a) is in contact with the first surface in the first direction; and the at least one k-th point (40) is positioned in the second magnetic plate forming the second surface.

According to a seventh aspect of the armature core of the present invention, in the armature core according to any one of the second to fifth aspects: the second direction (D2) is a radial direction with the axis (P) being a center; the N magnetic plates (121) include: one end (121d) positioned on a side opposite to the extending part (121a) in the first direction (D1); and a slit (124) penetrating through itself in the second direction on the side opposite to the extending part in the first direction; and the at least one k-th point is positioned at the one end.

According to an eighth aspect of the armature core of the present invention, in the armature core according to any one of the second to fifth aspects: the N magnetic plates (121) include: one end (121d) positioned on a side opposite to the extending part (121a) in the first direction (D1); and a recessed part (125) positioned on the side opposite to the extending part in the first direction and being open toward the first magnetic body (11) side in a third direction (D2, D3) perpendicular to the axis; and the at least one k-th point (40) is positioned at the one end.

According to a ninth aspect of the armature core of the present invention, in the armature core according to the eighth aspect, the hole (112) includes a second recessed part (113) fitted with the recessed part (125).

According to a tenth aspect of the armature core of the present invention, in the armature core according to any one of the second to fifth aspects: the second direction (D2) is a radial direction with the axis (P) being a center; each of the N magnetic plates (121) includes: one end positioned on a side opposite to the extending part (121a) in the first direction (D1); and a first recessed part (126) being open toward the side opposite to the extending part at a center in a circumferential direction (D3) with the axis being a center, at the one end; the hole (112) includes a second recessed part (114) fitted with the recessed part; and the at least one k-th point is positioned at a boundary between the first recessed part and the second recessed part.

According to an eleventh aspect of the armature core of the present invention, in the armature core according to any one of the second to fifth aspects: the second direction (D2) is a radial direction with the axis being a center; each of the N magnetic plates (121) includes: one end positioned on a side opposite to the extending part (121a) in the first direction (D1); and a projection (126) projecting toward the side opposite to the extending part at a center in a circumferential direction (D3) with the axis being a center, at the one end; the projection is inserted through the hole (112); and the at least one k-th point is positioned at the projection,

According to a twelfth aspect of the armature core of the present invention, in the armature core according to any one of the second to fifth aspects: the hole (112) includes: a first hole part (112a; 112) extending from the first surface (11a) along the first direction (D1); a second hole part (112b; 132) extending from the first hole part along the first direction (D1) to reach the second surface (11b) and having a width smaller than a width of the first hole part in a third direction (D3) perpendicular to the first direction and the second direction (D2); and a first recessed part (112c; 121g) being open toward the second surface side along the first direction at a boundary between the first hole part and the second hole part; each of the N magnetic plates (121) includes in a portion inserted through the hole; a second insertion part (121f) inserted through the second hole part; and a second recessed part (121g) fitted with the recessed part; and the at least one k-th point (40) is positioned at a boundary between the second hole part and the second insertion part.

According to a thirteenth aspect of the armature core of the present invention, in the armature core according to any one of the second to fifth aspects: an armature coil is wound around the extending part (121a) with the first direction (D1) being an axis; and the first magnetic body (11) includes a plurality of second magnetic plates (111; 111+131) laminated in the first direction (D1), forming the first surface to the third surface (11a, 11b, 11c; 11a, 13a, 11c+13c) in a state in which the plurality of second magnetic plates are respectively laminated, and magnetically connecting the plurality of second magnetic bodies to each other.

According to a fourteenth aspect of the armature core of the present invention, in the armature core According to any one of the second to thirteenth aspects, the first magnetic body (11+13) includes: a back yoke (11) forming the first surface (11a) and functioning as a yoke magnetically connecting the plurality of second magnetic bodies (12) to each other; and a reinforcing plate (13) provided separately from the back yoke, mounted to face the back yoke in the first direction (D1), and forming the second surface (13b).

According to a fifteenth aspect of the armature core of the present invention, in the armature core according to the fourteenth aspect, the reinforcing plate is non-magnetic.

According to a sixteenth aspect of the armature core of the present invention, in the armature core according to the fourteenth or fifteenth aspect: the at least one k-th point (40) is positioned at the end on the second surface (11b) side of the point at which the edge of the boundary surface (122) and the third surface (11c) are close to each other; and the back yoke is a dust core.

According to a seventeenth aspect of the armature core of the present invention, in the armature core according to any one of the fourteenth to sixteenth aspects: the second direction (D2) is a radial direction with the axis (P) being a center; each of the N magnetic plates (121) includes: a back yoke insertion part (121e) inserted through a portion of the hole, the portion being provided in the back yoke (11); and a reinforcing plate insertion part (121f) extending from a center of the back yoke insertion part in a circumferential direction with the axis being a center, having a width smaller than a width of the back yoke insertion part in the circumferential direction, and inserted through a portion of the hole, the portion being provided in the reinforcing plate (13); and the at least k-th point is positioned at a boundary between the reinforcing plate insertion part and the reinforcing plate.

According to an eighteenth aspect of the present invention, in the armature core according to the first aspect, the armature core further includes a reinforcing plate (13) including a fourth surface (13a) and a fifth surface (13b) facing each other in the first direction (D1) and mounted to the first magnetic body (11) with the second surface (11b) and the fourth surface facing each other.

According to a nineteenth aspect of the armature core of the present invention, in the armature core according to the eighteenth aspect, the reinforcing plate is non-magnetic.

According to a twentieth aspect of the armature core of the present invention, in the armature core according to the eighteenth or nineteenth aspect: the first magnetic body (11) includes a plurality of second magnetic plates (111; 111+131) laminated in the first direction (D1) and forming the first surface to the third surface (11 a, 11b, 11c; 11 a, 13a, 11c+13c) in a state in which the plurality of second magnetic plates are respectively laminated; and the reinforcing plate (13) includes a plurality of third magnetic plates laminated in the first direction (D1) and forming the fourth surface (13a) and the fifth surface (13b) in a state in which the plurality of third magnetic plates are respectively laminated.

According to a twenty-first aspect of the armature core of the present invention, in the armature core according to the eighteenth or nineteenth aspect: the first magnetic body (11) includes a plurality of second magnetic plates (111; 111+113) laminated in the first direction (D1) and forming the first surface to the third surface (11a, 11b, 11c; 11a, 13a, 11c+13c) in a state in which the plurality of second magnetic plates are respectively laminated; and the reinforcing plate (13) has a width larger than a width of each of the plurality of second magnetic plates in the first direction.

According to a twenty-second aspect of the armature core of the present invention, in the armature core according to any one of the eighteenth to twenty-first aspects: the at least one k-th point (40) is positioned at an end on the second surface (11b) side of a portion at which the edge of the boundary surface (122) and the third surface are close to each other; and the reinforcing plate (13) further includes a second hole (132) penetrating through the fourth surface (13a) and the fifth surface (13b) in the first direction (D1) and leading to the at least one k-th point (40).

According to a twenty-third aspect of the armature core of the present invention, in the armature core according to any one of the eighteenth to twenty-first aspects: the at least one k-th point (40) is positioned at an end on the second surface (11b) side of a portion at which the edge of the boundary surface (122) and the third surface are close to each other; and the reinforcing plate (13) includes a second hole (134) provided in the fourth surface (13a) and covering the at least one k-th point (40).

According to a twenty-fourth aspect of the armature core of the present invention, in the armature core according to any one of the eighteenth to twenty-third aspects, each of the N magnetic plates (121) includes an extending part (121a) extending on a side opposite to the second surface (11b) from the hole (112) on the first surface (11a) side along the first direction (D1), around which an armature coil (16) is wound with the first direction being an axis in a state in which the N magnetic plates are laminated; and a predetermined gap is provided between each of the N magnetic plates (121) and the reinforcing plate (13).

According to a twenty-fifth aspect of the armature core of the present invention, in the armature core according to the twenty-fourth aspect, the fourth surface (13a) is provided with a recessed part (135) open toward the second surface (11b) side in a region facing the plurality of second magnetic bodies (12) in the first direction (D1).

According to a twenty-sixth aspect of the armature core of the present invention, in the armature core according to the twenty-fourth aspect, each of the N magnetic bodies (11) has an end on a side opposite to the extending part (121a) in the first direction (D1) and includes a recessed part (125) open toward the fourth surface (13a) side on the one end side.

According to a twenty-seventh aspect of the armature core of the present invention, in the armature core according to any one of the eighteenth to twenty-sixth aspects, the reinforcing plate (13) and the first magnetic body (11) each include a circular side surface with the axis (P) being a center, the reinforcing plate and the first magnetic body being welded to each other on the side surfaces.

According to a twenty-eighth aspect of the armature core of the present invention, in the armature core according to any one of the eighteenth to twenty-seventh aspects, the reinforcing plate (13) and the first magnetic body (11) are connected to each other with a caulking pin or a caulking bolt.

According to a twenty-ninth aspect of the armature core of the present invention, in the armature core according to any one of the second to twenty-eighth aspects, the second direction (D2) is a radial direction with the axis (P) being a center.

According to a thirtieth aspect of the armature core of the present invention, in the armature core according to any one of the second to ninth, twelfth to fourteenth, and eighteenth to twenty-ninth aspects, the second direction (D2) is a circumferential direction with the axis (P) being a center.

According to a thirty-first aspect of the armature core of the present invention, in the armature core according to any one of the first to thirtieth aspects, the N magnetic plates (111) each have the same shape.

According to a thirty-second aspect of the armature core of the present invention, in the armature core according to any one of the second to twenty-ninth aspects: the second direction (D2) is a radial direction with the axis (P) being a center; and the extending part (121a) included in each of the N magnetic plates (121) has a larger width in a circumferential direction with the axis being a center, toward the second direction.

According to a thirty-third aspect of the armature core of the present invention, in the armature core according to any one of the first to thirty-second aspects: each of the plurality of second magnetic bodies (12) has a rectangular shape in cross section perpendicular to the first direction (D1) at a position across the hole (112); and a shape of the hole in the cross section also has the rectangular shape.

According to a thirty-fourth aspect of the armature core of the present invention, in the armature core according to any one of the first to fourth, thirteenth and eighteenth aspects: the first magnetic body (11) includes a plurality of second magnetic plates (111; 111+131) laminated in the first direction (D1) and forming the first surface to the third surface (11a, 11b, 11c; 11a, 13 a, 11c+13c) and a circular fourth surface in a state in which the plurality of second magnetic plates are respectively laminated, the fourth surface connecting the first surface and the second surface with the axis being a center; and the plurality of second magnetic plates are respectively welded to each other on the fourth surface.

According to a thirty-fifth aspect of the armature core of the present invention, in the armature core according to any one of the first to fourth, thirteenth and eighteenth aspects: the first magnetic body (11) includes a plurality of second magnetic plates (111; 111+131) laminated in the first direction (D1) and forming the first surface to the third surface (11a, 11b, 11c; 11a, 13a, 11c+13c) in a state in which the plurality of second magnetic plates are respectively laminated; and the plurality of second magnetic plates are respectively connected to each other with a caulking pin or a caulking bolt.

According to a thirty-sixth aspect of the armature core of the present invention, in the armature core according to any one of the first to thirty-fifth aspects, a welding diameter at the at least one k-th point (40) is smaller than widths of the k-th and the (k+1)th ones of the magnetic plates (121) adjacent to each other in the second direction (D2).

According to a thirty-seventh aspect of the armature core of the present invention, in the armature core according to any one of the first to thirty-fifth aspects: the at least one k-th point (40) is positioned only on one side in the third direction (D3) perpendicular to the first direction (D1) and the second direction (D2), where k represents a natural number of any one of an odd number and an even number between 1 and N-2; the at least one (k+1)th point is positioned only on the other side in the third direction; and welding diameters of the k-th point and the (k+1)th point are smaller than double the widths of the k-th and the (k+1)th ones of the magnetic plates (121) in the first direction.

According to a thirty-eighth aspect of the armature core of the present invention, in the armature core according to any one of the first to thirty-seventh aspects, the at least one k-th point is welded by a laser.

### Effects of the Invention

According to the first aspect of the armature core of the present invention, fixing of the adjacent k-th and (k+1)th magnetic plates and fixing of the first magnetic body and the second magnetic bodies can be achieved by one-time welding. Accordingly, it is possible to achieve an armature core for an axial gap motor with the first magnetic body as a yoke and the second magnetic bodies as teeth, while reducing the number of welding steps.

According to the second aspect of the armature core of the present invention, the armature can be achieved by winding an armature coil around the extending part with the first direction being an axis.

According to the third aspect of the armature core of the present invention, the armature coils are wound around the second magnetic bodies, and then the second magnetic bodies are inserted through the holes, whereby the second magnetic bodies and the first magnetic body can be fixed by welding. Further, welding is performed at the portion with a smaller magnetic density compared with the case where welding is performed on the first surface side, and thus the effect on the properties as an armature, which are reduction of magnetic properties of the first magnetic body and the second magnetic bodies due to welding, is minimized.

According to the fourth aspect of the armature core of the present invention, the armature can be achieved by inserting the second magnetic bodies through the holes, fixing the second magnetic bodies and the first magnetic body by welding, and then winding the armature coils.

According to the fifth aspect of the armature core of the present invention, two second magnetic plates forming the first surface and the second surface are respectively fixed to the k-th and (k+1)th magnetic plates by welding, and thus the plurality of second magnetic plates interposed between the first surface and the second surface can also be fixed to each other.

According to the sixth aspect of the armature core of the present invention, the extending part is in contact with the first surface in the first direction, and the second magnetic plate forming the second surface and the k-th and (k+1)th magnetic plates are welded to each other at the k-th point. Accordingly, a plurality of second magnetic plates interposed between the first surface and the second surface can be fixed by being sandwiched between the extending part and the welding part.

According to the seventh aspect of the armature core of the present invention, the slit functions as a magnetic resistance, whereby it is possible to reduce the magnetic flux passing through the k-th point among the magnetic fluxes flowing between the first magnetic body and the second magnetic bodies. Therefore, the magnetic flux is unlikely to pass through the welded portion, and thus the degradation of the magnetic properties as an armature can be reduced.

According to the eighth aspect of the armature core of the present invention, the recessed part functions as a magnetic resistance, whereby it is possible to reduce the magnetic flux passing through the k-th point among the magnetic fluxes flowing between the first magnetic body and the second magnetic bodies. Therefore, the magnetic flux is unlikely to pass through the welded point, and thus the degradation of the magnetic properties as an armature can be reduced.

According to the ninth aspect of the armature core of the present invention, the position of the second recessed part can be used as a reference for positioning of the second magnetic body with respect to the first magnetic body.

According to the tenth aspect of the armature core of the present invention, the second recessed part can be used as a reference for positioning of the second magnetic body with respect to the first magnetic body. In addition, normally, the magnetic flux flowing from the second magnetic body to the first magnetic body leads toward the adjacent second magnetic bodies in the circumferential direction. According to the armature core of Claim 14, the k-th point is positioned at a recessed part positioned at the center of the second magnetic body in the circumferential direction, and a magnetic resistance rises in the recessed part, whereby it is possible to reduce the magnetic flux passing through the k-th point. Therefore, the magnetic flux is unlikely to pass through the welded point, and hence the degradation of the magnetic properties as an armature can be reduced.

According to the eleventh aspect of the armature core of the present invention, the position of the second hole part can be used as a reference for positioning of the second magnetic body with respect to the first magnetic body. In addition, the k-th point is positioned at the projection positioned at the center of the second magnetic body in the circumferential direction, whereby it is possible to reduce the magnetic flux passing through the k-th point.

According to the twelfth aspect of the armature core of the present invention, the first recessed part and the second recessed part extending in the first direction are fitted with each other, whereby it is possible to prevent the first magnetic body and the second magnetic body from deforming in the third direction in welding the first magnetic body and the second magnetic body at the k-th point.

According to the thirteenth aspect of the armature core of the present invention, it is possible to reduce an eddy current generated in the first magnetic body due to the magnetic flux flowing inside the first magnetic body along the circumferential direction with an axis being the center.

According to the fourteenth, eighteenth and twenty-first aspects of the armature core of the present invention, the strength of the armature core can be improved.

According to the fifteenth and nineteenth aspects of the armature core of the present invention, the magnetic flux flows through the back yoke in a manner of avoiding the reinforcing plate. Therefore, the metal that has not been subjected to the processing of reducing an eddy current can be used as a reinforcing plate.

According to the sixteenth aspect of the armature core of the present invention, the reinforcing plate and the teeth are welded to each other, and thus even when a dust core difficult to be welded is used as a back yoke, there occurs no problem in terms of welding and fixing of the teeth and the first magnetic body.

According to the seventeenth aspect of the armature core of the present invention, the magnetic flux flowing from the second magnetic body to the first magnetic body leads to the adjacent second magnetic bodies in the circumferential direction. The width of the back yoke insertion part in the circumferential direction is large, and thus the magnetic flux is likely to flow through the back yoke in the circumferential direction and is unlikely to flow through the reinforcing plate. Therefore, the eddy current is unlikely to be generated in the reinforcing plate, and thus the degree of freedom increases in selecting a material for the reinforcing plate. For example, a thick steel plate can be used.

According to the twentieth aspect of the armature core of the present invention, the same material can be used for the first magnetic body and the reinforcing plate.

According to the twenty-second aspect of the armature core of the present invention, welding can be performed at the k-th point after the reinforcing plate is mounted onto the first magnetic body.

According to the twenty-third aspect of the armature core of the present invention, it is possible to prevent a gap from being generated between the first magnetic body and the reinforcing plate by a bump due to welding at the k-th point.

According to the twenty-fourth aspect of the armature core of the present invention, it is possible to reduce the magnetic flux flowing from the second magnetic body to the reinforcing plate.

According to the twenty-fifth and twenty-sixth aspects of the armature core of the present invention, the armature core according to the twenty-fourth aspect can be achieved.

According to the twenty-seventh and twenty-eighth aspects of the armature core of the present invention, the first magnetic body and the reinforcing plate can be fixed to each other.

According to the twenty-ninth aspect of the armature core of the present invention, the magnetic flux flowing inside the first magnetic body is likely to flow in the circumferential direction, whereby the magnetic resistance in the circumferential direction is reduced.

According to the thirtieth aspect of the armature core of the present invention, in a case where field magnets are arranged at positions facing the second magnetic bodies in the first direction, the flow of the magnetic fluxes from the field magnets can be made smooth because the boundary between the magnetic plates extends along the radial direction even when the widths of the field magnets in the radial direction with the axis being the center are made larger than the widths of the second magnetic bodies.

According to the thirty-first aspect of the armature core of the present invention, the N magnetic plates have the same shape, which facilitates manufacturing. In addition, the clearance between the welding point or the armature coil and the second magnetic body can be easily set.

According to the thirty-second aspect of the armature core of the present invention, an armature coil is easily wound around each piece. Further, by arranging one having a smaller width of the second magnetic bodies on the axis side, or alternately arranging ones having a smaller width and ones having a larger width in the circumferential direction, arrangement can be made in the circumferential direction with small dead space and a small diameter when the armature coils are wound.

According to the thirty-third aspect of the armature core of the present invention, the side to be welded of the welding part of the first magnetic body is linear in the lamination direction. Therefore, there is no step, and the distance between the edge of the boundary at which the k-th and (k+1)th magnetic bodies are in contact with each other in the second direction and the third surface forming the hole can be made small, which facilitates welding at the k-th point.

According to the thirty-fourth and thirty-firth aspects of the armature core of the present invention, the second magnetic plates can be fixed to each other.

According to the thirty-sixth aspect of the armature core of the present invention, welding is not repeated at the points of the adjacent k-th and (k+1)th points, whereby it is possible to reduce distortions of the magnetic plates to which the j-th and (k+1)th points belong.

According to the thirty-seventh aspect of the armature core of the present invention, welding is not repeated at the k-th and (k+2)th points adjacent to each other in one side of the third direction, whereby it is possible to reduce distortions of the (k+1)th and (k+2)th magnetic plates positioned between the k-th and (k+2)th points. In addition, a magnetic flux flows through the first magnetic body along the first direction by the armature coil. Each of the adjacent k-th and (k+1)th magnetic plates is bonded only on one side of the third direction, whereby it is possible to reduce an eddy current that is generated due to the magnetic flux and flows around the first direction through the welding part.

According to the thirty-eighth aspect of the armature core of the present invention, a welding diameter can be reduced.

The object, features, aspects, and advantages of the present invention will be more apparent from the following detailed description in conjunction with the attached drawings.

### Brief Description of Drawings

[FIG. 1] An exploded perspective view showing a conceptual configuration of an example of an armature according to a first embodiment.
[FIG.2] A conceptual cross-sectional view of the armature shown in FIG. 1 at a position across one tooth in a circumferential direction.
[FIG. 3] A conceptual configuration diagram showing an example of one tooth.
[FIG. 4] A cross-sectional view showing a conceptual configuration of an example of the armature in cross section including a boundary surface between magnetic plates included in one tooth.
[FIG. 5] A plan view of a back yoke 11 of the armature shown in FIG. 1, which is viewed along a rotation axis direction.
[FIG. 6] A cross-sectional view showing a conceptual configuration of another example of the armature according to the first embodiment at the same position as that of the cross section shown in FIG. 4.
[FIG. 7] A cross-sectional view showing a conceptual configuration of another example of the armature according to the first embodiment at the same position as that of the cross section shown in FIG. 4.
[FIG. 8] A cross-sectional view showing a conceptual configuration of another example of the armature according to the first embodiment at the same position as that of the cross section shown in FIG. 4.
[FIG. 9] A flowchart showing an example of a method of manufacturing the armature shown in FIGS. 4 to 7.
[FIG. 10] A flowchart showing an example of a method of manufacturing the armature shown in FIG. 8.
[FIG. 11] A conceptual configuration diagram showing another example of one tooth.
[FIG. 12] A plan view of the back yoke 11 of the armature shown in FIG. 1, which is viewed along the rotation axis direction.
[FIG. 13] A cross-sectional view showing a conceptual configuration of an example of an armature according to a second embodiment at the same position as that of the cross section shown in FIG. 4.
[FIG. 14] A cross-sectional view showing a conceptual configuration of an example of an armature according to a third embodiment at the same position as that of the cross section shown in FIG. 4.
[FIG. 15] A cross-sectional view showing a conceptual configuration of another example of the armature according to the third embodiment at the same position as that of the cross section shown in FIG. 4.
[FIG. 16] A diagram showing a conceptual configuration of an example of an armature according to a fourth embodiment in cross section at a position across one tooth in the circumferential direction.
[FIG. 17] A cross-sectional view showing a conceptual configuration of another example of the armature according to the fourth embodiment at the same position as that of the cross section shown in FIG. 16.
[FIG. 18] A cross-sectional view showing a conceptual configuration of another example of the armature according to the fourth embodiment at the same position as that of the cross section shown in FIG. 16.
[FIG. 19] A cross-sectional view showing a conceptual configuration of another example of the armature according to the fourth embodiment at the same position as that of the cross section shown in FIG. 16.
[FIG. 20] A cross-sectional view showing a conceptual configuration of another example of the armature according to the fourth embodiment at the same position as that of the cross section shown in FIG. 16.
[FIG. 21] A cross-sectional view showing a conceptual configuration of another example of the armature according to a fifth embodiment at the same position as that of the cross section shown in FIG. 4.
[FIG. 22] A cross-sectional view showing a conceptual configuration of an example of an armature according to a sixth embodiment at the same position as that of the cross section shown in FIG. 4.
[FIG. 23] A cross-sectional view showing a conceptual configuration of another example of the armature according to the sixth embodiment at the same position as that of the cross section shown in FIG. 22.
[FIG. 24] A cross-sectional view showing a conceptual configuration of another example of the armature according to the sixth embodiment at the same position as that of the cross section shown in FIG. 23.
[FIG. 25] A cross-sectional view showing a conceptual configuration of another example of the armature according to the sixth embodiment at the same position as that of the cross section shown in FIG. 22.
[FIG. 26] A cross-sectional view showing a conceptual configuration of another example of the armature according to the sixth embodiment at the same position as that of the cross section shown in FIG. 25.
[FIG. 27] A cross-sectional view showing a conceptual configuration of another example of the armature according to the sixth embodiment at the same position as that of the cross section shown in FIG. 26.
[FIG. 28] A cross-sectional view showing a conceptual configuration of another example of the armature according to the sixth embodiment at the same position as that of the cross section shown in FIG. 27.
[FIG. 29] A conceptual configuration diagram showing an example of one tooth according to a seventh embodiment.
[FIG. 30] An exploded perspective view showing an example of an armature according to the seventh embodiment, which shows a conceptual configuration.
[FIG. 31] A conceptual configuration diagram showing another example of one tooth according to the seventh embodiment.
[FIG. 32] A plan view showing an example of an armature according to an eighth embodiment at the same position as that of the plan view shown in FIG. 5.
[FIG. 33] A conceptual cross-sectional view showing an example of an armature according to a ninth embodiment at the same position as that of the cross section shown in FIG. 4.
[FIG. 34] A flowchart showing an example of a method of manufacturing the armature shown in FIG. 33.
[FIG. 35] A conceptual cross-sectional view showing another example of the armature according to the ninth embodiment at the same position as that of the cross section shown in FIG. 4.
[FIG. 36] A flowchart showing an example of a method of manufacturing an armature according to a tenth embodiment.
[FIG. 37] A diagram showing cross sections of a portion extending from a back yoke and a portion inserted through the back yoke of one tooth, which are perpendicular to a rotation axis.
[FIG. 38] A diagram showing cross sections of the portion extending from the back yoke, the portion inserted through the back yoke and a portion inserted through a reinforcing plate of one tooth, which are perpendicular to the rotation axis.
[FIG. 39] A diagram showing cross sections of the portion extending from the back yoke, the portion inserted through the back yoke and the portion inserted through the reinforcing plate of one tooth, which are perpendicular to the rotation axis.
[FIG. 40] A diagram showing cross sections of the portion extending from the back yoke, the portion inserted through the back yoke and the portion inserted through the reinforcing plate of one tooth, which are perpendicular to the rotation axis.
[FIG. 41] A diagram showing cross sections of the portion extending from the back yoke, the portion inserted through the back yoke and the portion inserted through the reinforcing plate of one tooth, which are perpendicular to the rotation axis.

### Best Modes for Carrying Out the Invention

Armature cores according to embodiments of the present invention are described below with reference to the drawings. Note that the same reference symbols denote the same or corresponding portions, and overlapping description is omitted.

### First Embodiment

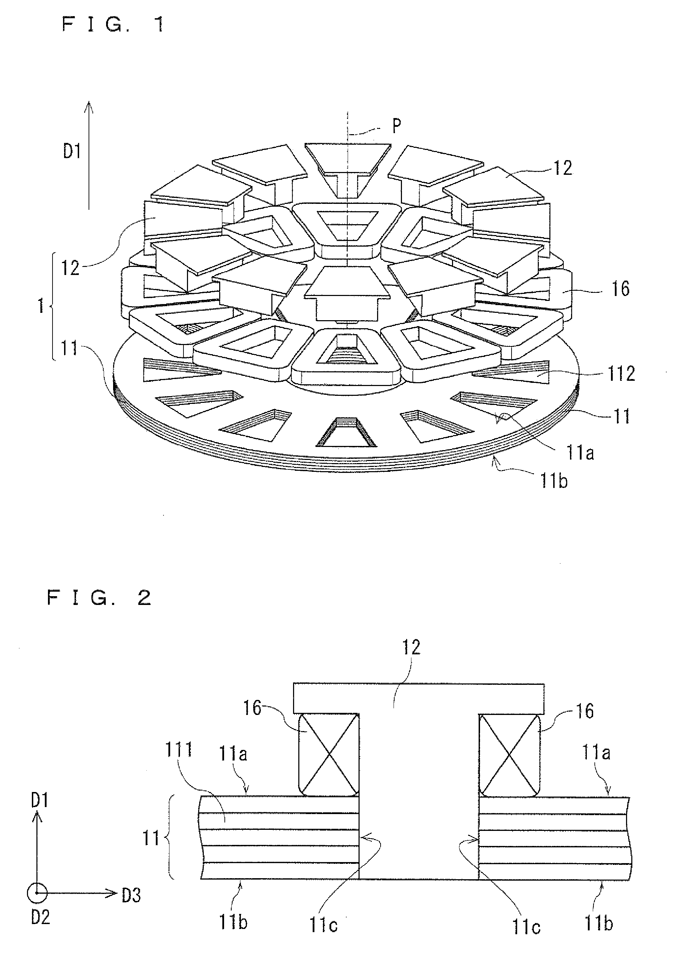

FIG. 1 is a conceptual exploded perspective view showing an armature including an example of an armature core according to a first embodiment. The armature includes an armature core 1 and a plurality of armature coils 16. The armature core 1 includes a back yoke 11 and a plurality of teeth 12. Note that FIG. 1 shows the back yoke 11, the teeth 12 and the armature coils 16 that are separated from each other in a direction along a rotation axis P (hereinafter, referred to as a rotation axis direction D1). Unless particularly noted in the present application, the armature coil refers to a mode in which wires are wound as a whole, not to each wire constituting this. This holds true for the drawings as well. Leading lines in start and end of winding and wire connection thereof are also omitted in the drawings.

FIG. 2 is a conceptual cross-sectional view of the armature shown in FIG. 1 at a position across one tooth 12 in a circumferential direction with the rotation axis P being the center (hereinafter, merely referred to as a circumferential direction). FIG. 2 shows the back yoke 11, one tooth 12 and one armature coil 16 that are not separated from each other along the rotation axis direction D1. Further, in the drawing, for the sake of convenience, the thicknesses of individual steel plates constituting the back yoke 11 are shown by enlargement. While the number of laminations is five for simplicity, in actuality, a larger number of thinner steel plates are laminated. The same holds true for other drawings.

The back yoke 11 includes surfaces 11a and 11b and a plurality of holes 112. The surfaces 11a and 11b face each other in the rotation axis direction D1. Each of the plurality of holes 112 penetrates through the surfaces 11a and 11b along the rotation axis direction D1. and are circularly arranged around the rotation axis P. In addition, a surface forming the hole 112 is referred to as a surface 11c.

Further, the back yoke 11 includes a plurality of flat magnetic plates 111 laminated along, for example, the rotation axis direction D1. The plurality of magnetic plates 111 are, for example, laminated steel plates and form the surfaces 11a, 11b and 11c in the laminated state. Note that the back yoke 11 is not necessarily required to include a plurality of magnetic plates 111. The same holds true for the other embodiments. In a case where a plurality of magnetic plates 111 are provided, an eddy current generated due to the magnetic flux flowing inside the back yoke 11 in the circumferential direction cuts across a boundary of the plurality of magnetic plates 111, with the result that an eddy current can be reduced.

Further, each of the plurality of magnetic plates 111 may have concavities and convexities in, for example, the rotation axis direction D1, and the concavities and convexities may be engaged with each other in the rotation axis direction D1. The above-mentioned engagement is referred to as so-called twining. Accordingly, the magnetic plates 111 can be fixed to each other.

Alternatively, there may be provided a resin that is interposed between the magnetic plates 111 and bonds the magnetic plates 111 to each other. For example, the back yoke 11 is immersed in a coating fluid in the state in which the magnetic plates 111 are laminated, whereby the coating fluid is impregnated between the magnetic plates 111. Then, a coating film may be interposed between the magnetic plates 111 by solidification of this coating fluid. Still alternatively, an adhesive may be applied between the magnetic plates 111 to be hardened.

Further, the surfaces 11a and 11b may be connected to each other and fixed by welding the magnetic plates 111 on a circular side surface with the rotation axis P being the center.

Further, there may be provided a through hole penetrating through the back yoke 11 along the rotation axis direction D1, and a caulking pin or a caulking bolt may be inserted into the through hole, to thereby fix the magnetic plates 111 to each other.

Needless to say, twining, a resin, welding, a caulking pin and a caulking bolt may be appropriately combined.

The teeth 12 are respectively inserted through the plurality of holes 112. The back yoke 11 magnetically connects the plurality of teeth 12.

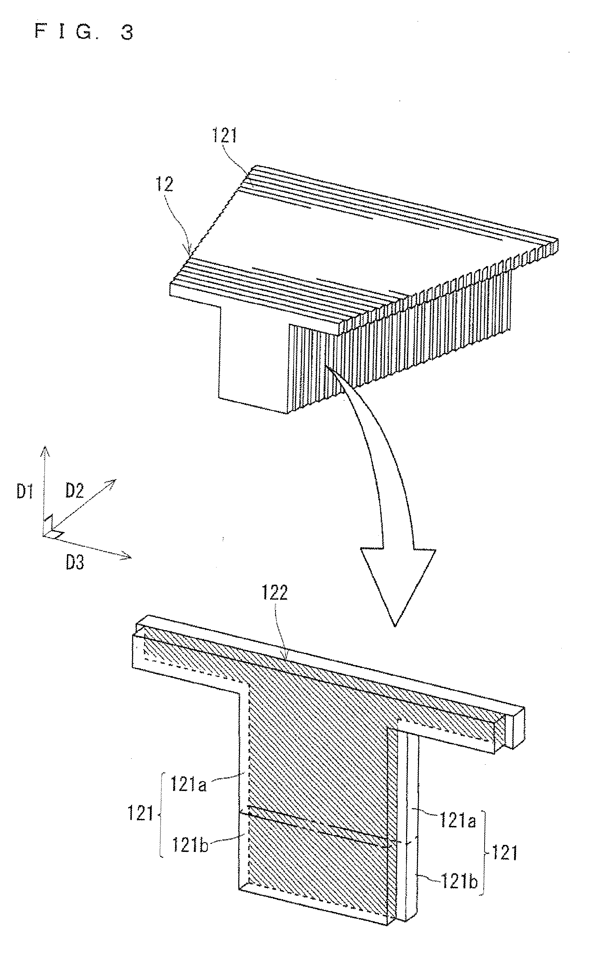

FIG. 3 is a conceptual perspective view showing an example of one tooth 12 of the armature shown in FIG. 1, which also shows two laminated magnetic plates 121 under magnification. The tooth 12 includes a plurality of magnetic plates 121 laminated along a lamination direction D2 perpendicular to the rotation axis direction D1. The plurality of magnetic plates 121 are, for example, laminated steel plates. While the following description including other embodiments is given by using, for example, a radial direction with the rotation axis P being the center (hereinafter, merely referred to as a radial direction) as the lamination direction D2, the circumferential direction may be used as the lamination direction D2 unless otherwise indicated. Individual modes of the lamination direction of the magnetic plate 121 are described in the other embodiments.

The plurality of magnetic plates 121 each include an extending part 121a and an insertion part 121b. The extending part 121a extends along the rotation axis direction D1 from the hole 112 on the surface 11 a side to the side opposite to the surface 11b. The insertion part 121 b extends along the rotation axis direction D1 from the extending part 121 a and is inserted through the hole 112.

With reference to FIGS. 1 and 2, the armature coil 16 is wound around the tooth 12 with the rotation axis direction D1 being the axis, through an insulator (not shown). More specifically, it is wound around the extending part 121a in the state in which the magnetic plates 121 are laminated. Accordingly, the armature can be achieved.

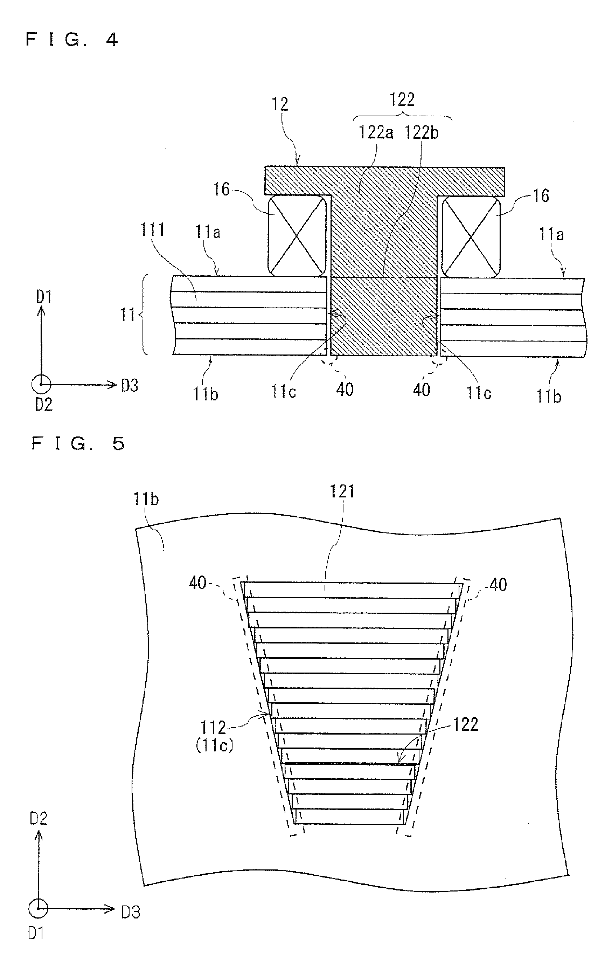

In the armature with the configuration as described above, between the back yoke 11 and the magnetic bodies 121, welding is performed therebetween at points at which an edge of a boundary surface 122 (also see FIG. 3) of two magnetic plates 121 adjacent in the lamination direction D2 and the surface 11c are close to each other and are exposed on the side of at least one side of the surfaces 11a and 11b. Specific example is described below with reference to FIGS. 4 and 5.

FIG. 4 shows a conceptual configuration of the armature shown in FIG. 1 in cross section including the boundary surface 122 between two adjacent magnetic plates 121 of one tooth 12. FIG. 5 is a plan view of the armature shown in FIG. 1 on the surface 11b side, which is viewed along the rotation axis direction D1. Note that FIGS. 4 and 5 show the back yoke 11, the tooth 12 and the armature coil 16 that are not separated from each other in the rotation axis direction D1. In FIG. 5, one of the boundary surfaces 122 between two adjacent magnetic bodies 121 is indicated by a bold line.

Between the back yoke 11 and the magnetic plates 121, welding is performed therebetween at points 40 at which the edge of the boundary surface 122 and the surface 11c are close to each other and are exposed on the surface 11b side. This is described in more detail. Of the boundary surface 122, a portion extending from the hole 112 toward the outside along the rotation axis direction D1 is referred to as an extending part 122a, and a portion inserted through the hole 112 is referred to as an insertion part 122b. The back yoke 11 and the magnetic plates 121 are welded to each other at the points 40 including the end on the surface 11b side of an edge (in other words, edge on the surface 11c side) of the insertion part 122b positioned at the end in a direction D3 perpendicular to the rotation axis direction D1 and the lamination direction D2 (if the lamination direction D2 is taken as the radial direction, the direction D3 is equivalent to the circumferential direction) and a boundary between the surfaces 11b and 11c.

Welding as described above is performed by an appropriate welding method and is performed by, for example, gas welding, arc welding, electroslag welding, electron beam welding, laser welding, resistance welding, forge welding-friction welding-explosion welding, or brazing-soldering. In particular, laser welding is preferable in small heat input amount as well as small bulge due to welding and small welding diameter. Further, plasma arc welding is preferable in that welding can be performed precisely.

The back yoke 11 and the magnetic plates 121 are welded to each other at the points 40, and thus fixing of the magnetic plates 121 and fixing of the back yoke 11 and the tooth 12 can be achieved by welding at the points 40. Accordingly, the armature core can be manufactured with reduced man-hours of welding.

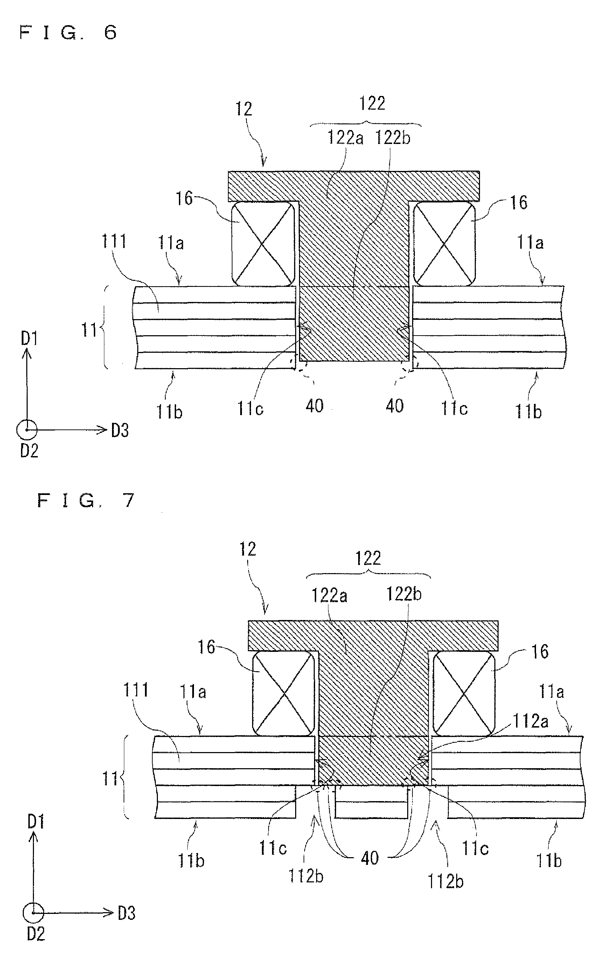

FIG. 6 is a conceptual cross-sectional view showing another example of the armature at the same position as that of the cross section shown in FIG. 4. Compared with the armature shown in FIG. 4, the tooth 12 does not penetrate through the hole 112. Even in the case as described above, the back yoke 11 and the magnetic plates 121 are welded to each other at the points 40 at which the edge of the boundary surface 122 and the surface 11c are close to each other and are exposed on the surface 11b side. More specifically, welding is performed at the points 40 at which the surface 11c is close to the end on the surface 11b side of the edge of the insertion part 122b positioned at the end in the direction D3.

FIG. 7 is a conceptual cross-sectional view showing another example of the armature at the same position as that of the cross section shown in FIG. 4. Compared with the armature shown in FIG. 4, the tooth 12 does not penetrate through the hole 112. Further, a part of an end surface of the tooth 12 that is positioned on the back yoke 11 side in the rotation axis direction D1 is in contact with the back yoke 11 in the rotation axis direction D1. Other part of the end surface is exposed on the surface 11b side through the hole 112.

In other words, the hole 112 is considered to include holes 112a and 112b. The hole 112a is a portion through which the tooth 12 is inserted from the surface 11a. The bottom of the hole 112a is in contact with the part of the end surface of the tooth 12 in the rotation axis direction D1. The hole 112b is linked to the hole 112a from the surface 11b and causes the other part of the end surface of the tooth 12 to be partially exposed on the surface 11b side. Note that the tooth 12 is not inserted through the hole 112b. The hole 112b is, for example, a long hole provided around a side on the side surface of the tooth 12, and may be punched through in advance. In a case where the hole 112b is not punched through in advance, welding can be performed so as to reach the tooth 12 by laser welding while melting the back yoke 11 from the surface 11b.

Between the back yoke 11 and the magnetic plates 121, welding is performed at the points 40 at which the edge of the boundary surface 122 and the surface 11c are close to each other and are exposed on the surface 11b side. More specifically, the back yoke 11 and the magnetic plates 121 are welded to each other at the points 40 including the end on the surface 11b side of the edge of the insertion part 122b positioned at the end in the direction D3 and the end on the surface 11b side of the surface 11c forming the hole 112a. Alternatively, the back yoke 11 and the magnetic plates 121 are welded to each other at the points 40 that are a boundary between the edge of the insertion part 122b positioned at the end in the rotation axis direction D1 and the surface 11c forming the hole 112b.

In the case of the armature shown in FIG. 7, the end surface of the tooth 12 is in contact with the back yoke 11 in the rotation axis direction D1, with the result that the positioning accuracy of the tooth 12 with respect to the back yoke 11 in the rotation axis direction D1 can be improved.

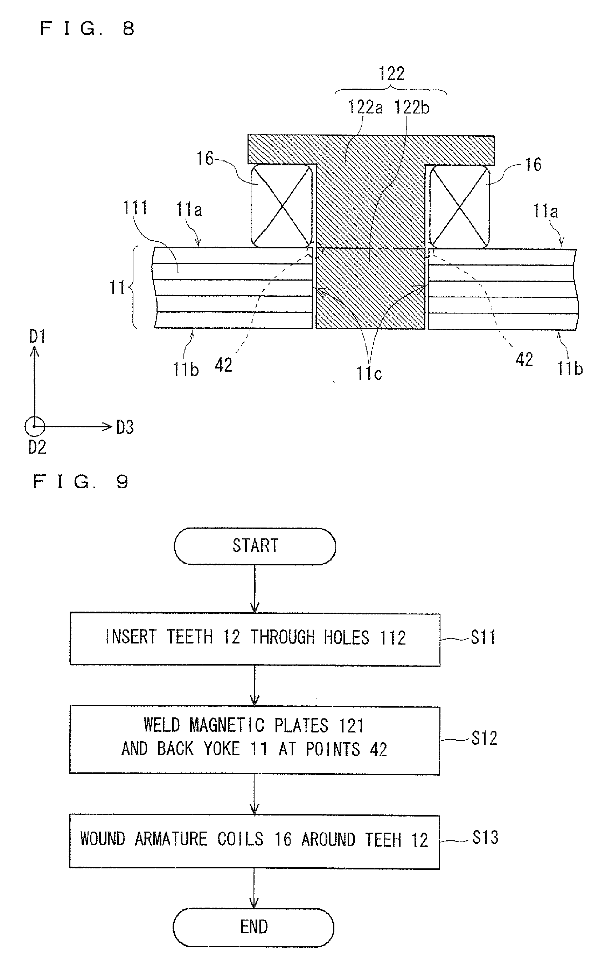

FIG. 8 is a conceptual cross-sectional view showing another example of the armature at the same position as that of the cross section shown in FIG. 4. Between the back yoke 11 and the magnetic plates 121, welding is performed therebetween at points 42 at which the edge of the boundary surface 122 and the surface 11c are close to each other and are exposed on the surface 11a side when viewed as a single armature core 1. More specifically, welding is performed at the points 42 including the end on the surface 11a side of the edge of the insertion part 122b positioned at the end in the direction D3 (in other words, edge of the insertion part 122b on the surface 11c side) and a boundary between the surfaces 11a and 11c.

In all armatures shown in FIGS. 4 to 8, welding of the magnetic plates 121 and the back yoke 11 is performed at the points 40 or the points 42.

FIG. 9 is a flowchart showing a procedure of manufacturing the armature shown in FIG. 8. First, in Step S11, the teeth 12 are inserted through the holes 112 in the state in which the magnetic plates 121 are laminated. In this case, it is desired to insert the teeth 12 through the holes 112 after temporarily fastening the magnetic plates 121 to each other. Next, in Step S12, the back yoke 11 and the magnetic plates 121 are welded to each other at the points 42. Next, in Step S13, an insulator (not shown) is mounted to the teeth 12 and the armature coils 16 are wound therearound. The armature shown in FIG. 8 can be manufactured through the procedure as described above. "Wounding" in this specification includes the processing of inserting the armature coil 16 wound in advance through the tooth 12. In a case where such processing is executed, it is desired that the end of the extending part 122a on the side opposite to the insertion part 122b have no eaves.

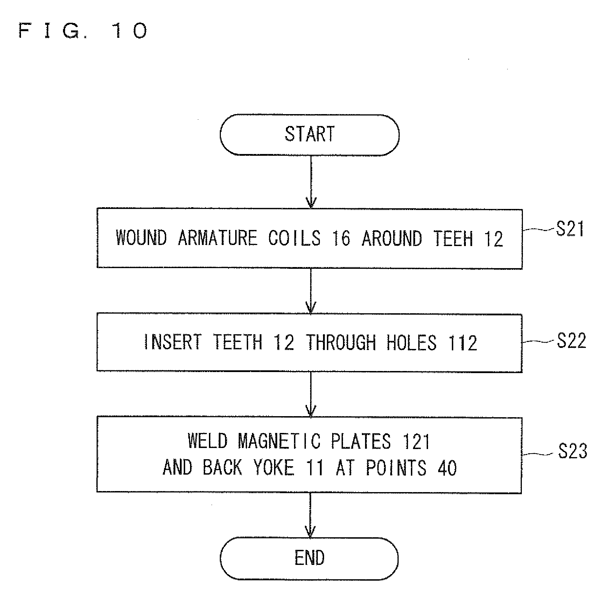

Further, as shown in FIGS. 4 to 7, in the cases where the welding points 40 are exposed in the state in which the armature coils 13 are wound around the teeth 12, an armature can be manufactured through the flowchart shown in FIG. 10. First, in Step S21, the armature coils 16 are wound around the teeth 12 to which an insulator (not shown) is mounted. In this case, it is desired to wind the armature coils 16 after temporarily fastening the magnetic plates 121 to each other. Next, in Step S22, the teeth 12 around which the armature coils 16 are wound are inserted through the holes 112 of the back yoke 11. Next, in Step S23, the back yoke 11 and the magnetic plates 121 are welded to each other at the points 40.

Through the procedure as described above, the armature coil 16 can be wound around the tooth 12 in the state in which the tooth 12 is not inserted into the hole 112, whereby the armature coil 16 is easily wound around the tooth 12.

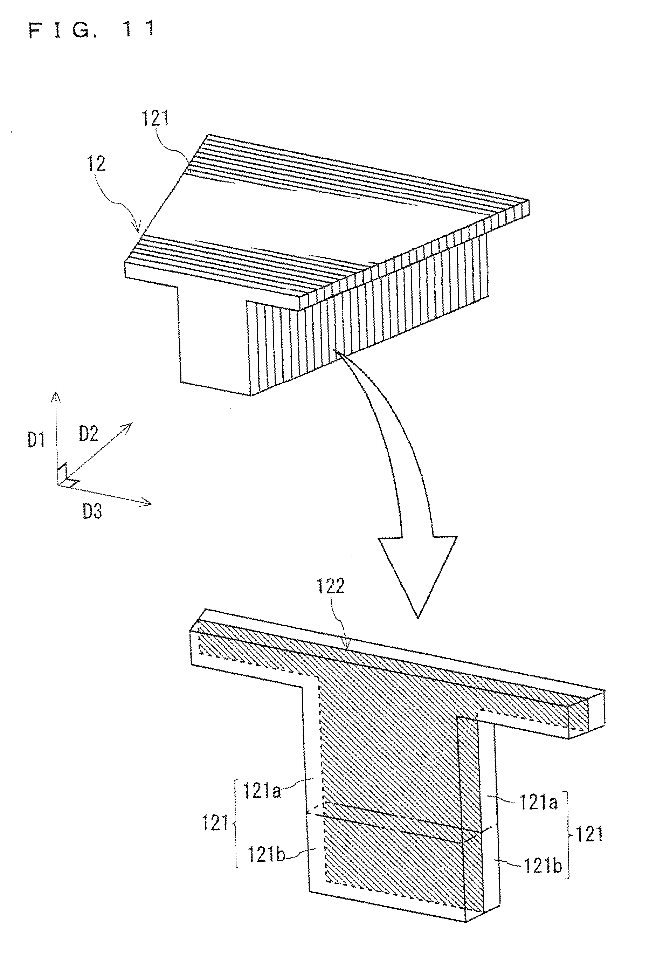

FIG. 11 is a conceptual perspective view showing another example of one tooth 12 of the armature shown in FIG. 1. Note that two adjacent magnetic plates 121 are shown under magnification. Compared with the tooth 12 shown in FIG. 3, both ends of the tooth 12 in the direction D3 do not have steps but are linear along the radial direction.

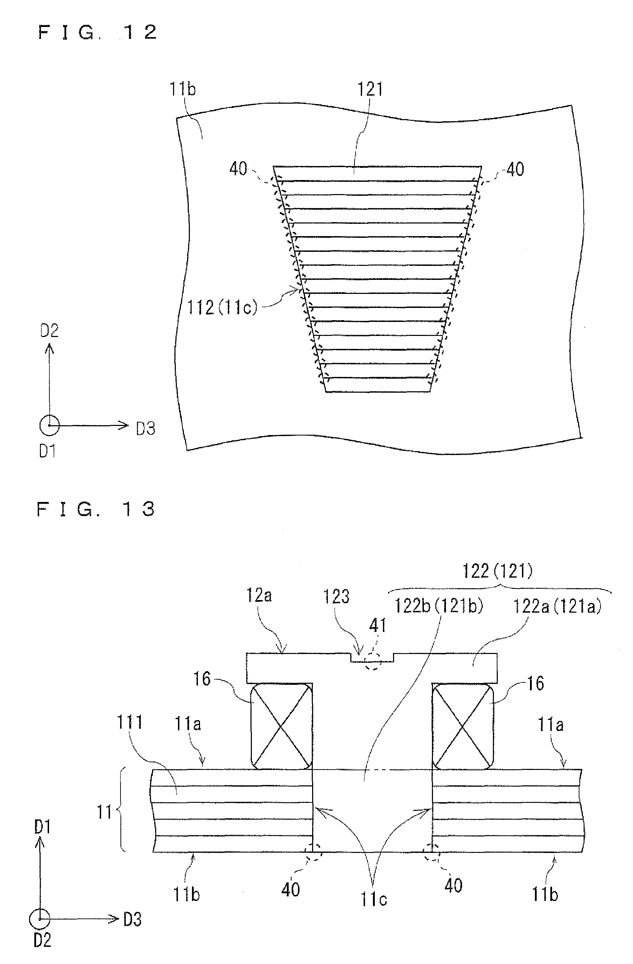

FIG. 12 is a conceptual plan view showing an example of an armature using the teeth 12 shown in FIG. 11 at the same position as that of the plan view shown in FIG. 5. Both ends of the hole 112 and both ends of the tooth 12 are linear in the same direction and are in contact with each other. Accordingly, a gap between the back yoke 11 and the tooth 12 can be reduced in the direction D3, and hence welding is performed easily.

While the following description (including other embodiments) is given by using the tooth 12 that is linear along the radial direction at both ends thereof, as shown in FIG. 3, the tooth 12 having stair-like steps at both ends thereof may be used. Alternatively, the tooth 12 shown in FIG. 3 may be used and both ends of the hole 112 in the direction D3 may have the shapes along the steps at both ends of the tooth 12. In this case, the gap between the tooth 12 and the back yoke 11 can be reduced, and hence welding is performed easily.

### Second Embodiment

An object of an armature according to a second embodiment is to firmly fix the magnetic plates 121 to each other.

A conceptual configuration of the armature according to the second embodiment is the same as that of FIG. 1. FIG. 13 is a cross-sectional view showing an example of the armature according to the second embodiment at the same position as that of the cross section shown in FIG. 4.

Each of the magnetic plates 121 includes one end 12a and a recessed part 123. The one end 12a is an end surface positioned on the side opposite to the back yoke 11 in the rotation axis direction D1. In other words, the extending part 122a includes the one end 12a on the side opposite to the surface 11a in the rotation axis direction D1. The recessed part 123 is open toward the side opposite to the back yoke 11 at the one end 12a. Further, a plurality of magnetic plates 121 are welded to each other at a point 41 in the recessed part 123.

As a result, the magnetic plates 121 can be firmly fixed to each other. Typically, the point at which welding is performed may bulge toward the adjacent surface in some cases. In the mode shown in FIG. 13, it is possible to reduce or remove an amount by which a bulge due to welding protrudes toward the side opposite to the back yoke 11 with respect to the one end 12a. Therefore, in a case where a field element that faces the armature on the side opposite to the back yoke 11 with respect to the teeth 12 is provided in, for example, the rotation axis direction D1, it is possible to reduce or avoid a reduction of the gap between the field element and the teeth 12 due to a bulge resulting from welding.

From the viewpoint that the magnetic plates 121 are firmly fixed to each other, the mode is not limited to one shown in FIG. 13. For example, each of the magnetic plates 121 may be provided with the above-mentioned twining. Even in this case, the magnetic plates 121 can be firmly fixed to each other.

Further, there may be provided a resin that is interposed between the magnetic plates 121 and firmly bonds the magnetic plates 121 to each other. For example, the teeth 12 are immersed in the coating fluid in the state in which the magnetic plates 121 are laminated, whereby the coating fluid is impregnated between the magnetic plates 121. Then, a coating film may be interposed between the magnetic plates 121 by solidification of the coating fluid. Alternatively, an adhesive may be applied between the magnetic plates 121 to be hardened.

In such a case, the magnetic plates 121 are firmly bonded to each other by a resin, whereby the magnetic plates 121 can be fixed to each other more firmly.

Needless to say, welding described with reference to FIG.13, twining, and a resin may be combined appropriately.

### Third Embodiment

An object of an armature core according to a third embodiment is to fix the magnetic plates 111 to each other by means of welding between the back yoke 11 and the magnetic plates 121.

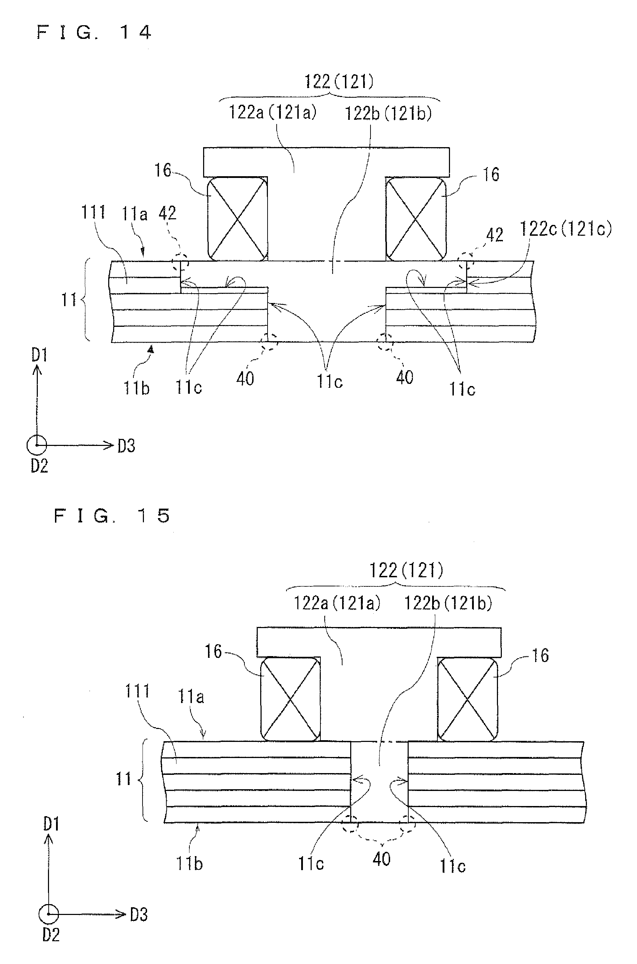

FIG. 14 is a cross-sectional view showing an example of an armature according to the third embodiment at the same position as that of the cross section shown in FIG. 4. In the armature shown in FIG. 14, the magnetic plates 121 and the back yoke 11 are welded to each other at the points 40 at which the edge of the boundary surface 122 between the adjacent magnetic plates 121 and the surface 11c are close to each other and are exposed on the surface 11b side and points 42 at which they are exposed on the surface 11a side. The points 40 are positioned on the magnetic plate 111 forming the surface 11b, and the points 42 are positioned on the magnetic plate 111 forming the surface 11 a.

The magnetic plate 111 forming the surface 11a and the magnetic plate 111 forming the surface 11b are respectively welded to the tooth 12, and thus the magnetic plates 111 interposed therebetween can be sandwiched and fixed. In this case, the means for fixing the magnetic plates 111 described in the first embodiment is not required. Needless to say, the magnetic plates 111 can be fixed to each other more firmly by combining this means.

Further, welding points between the back yoke 11 and the magnetic plates 121 are increased, whereby the magnetic plates 121 can be firmly fixed to each other and the teeth 12 can be firmly fixed to the back yoke 11.

Note that the description above is not limited to the mode shown in FIG. 14. In the armature shown in FIG. 8, for example, the back yoke 11 and the teeth 12 can be welded to each other at the points at which the edge of the boundary surface 122 is close to the surface 11c and are exposed on the surface 11b side. More specifically, those points are the points including the end on the surface 11b side of the edge of the insertion part 122b positioned at the end in the direction D3 (in other words, edge on the surface 11c side of the insertion part 122b) and the boundary between the surfaces 11b and 11c. Even in this case, the magnetic plate 111 forming the surface 11a and the magnetic plate 111 forming the surface 11b are respectively welded to the tooth 12, and thus the magnetic plates 111 therebetween can be fixed to each other.

Further, in FIG. 14, one ends 121c of a plurality of magnetic plates 121 positioned at the end in the direction D3 are positioned on the side opposite to the tooth 12 (extending part 121a) with respect to the armature coil 16 on the surface 11a side. In other words, the one end 121c protrudes beyond the extending part 121a along the direction D3. Further, the points 42 are positioned at the one ends 121c. FIG. 14 also shows, on the boundary surface 122, one end 122c of the boundary surface 122 as the portion corresponding to the one end 121c included in each of the magnetic plates 121. The point 42 can be regarded to be positioned at the one end 122c.

The armature with the above-mentioned configuration can be manufactured by the manufacturing method shown in FIG. 10, in which an armature coil is easily wound around the tooth 12. Specifically, the armature coil 16 is wound around the extending part 121a in the state in which the magnetic plates 121 are laminated with the rotation axis direction D1 being the axis in Step S21 so as not to go beyond the one end 121c. Accordingly, the points 42 can be exposed even in the state in which the armature coil 16 is wound around the tooth 12, which facilitates welding at the points 42.

Note that the description above does not depend on whether or not welding is performed at the points 40, and it suffices that the one end 121 c (122c) is positioned on the side opposite to the tooth 12 with respect to the armature coil 16 and the point 40 is positioned at the one end 121c (122c).

FIG. 15 is a cross-sectional view showing another example of the armature according to the third embodiment at the same position as that of the cross section shown in FIG. 4. The width of the extending part 121a in the direction D3 is larger than the width of the insertion part 121b in the direction D3. The extending part 121a is in contact with the surface 11a in the rotation axis direction D1. Further, the points 40 are positioned on the magnetic plate 111 forming the surface 11b. Accordingly, the magnetic plates 111 interposed between the surfaces 11a and 11b can be sandwiched by the extending part 12a and the welding points 40 and fixed to each other. In this case, the means for fixing the magnetic plates 111 described in the first embodiment is not required. Needless to say, the magnetic plates 111 can be fixed to each other more firmly by combining this means. In addition, welding may be performed at the points 42 similarly to FIG. 14.

### Fourth Embodiment

An object of an armature core according to a fourth embodiment is to reduce a flow of the magnetic fluxes passing through the welding points.

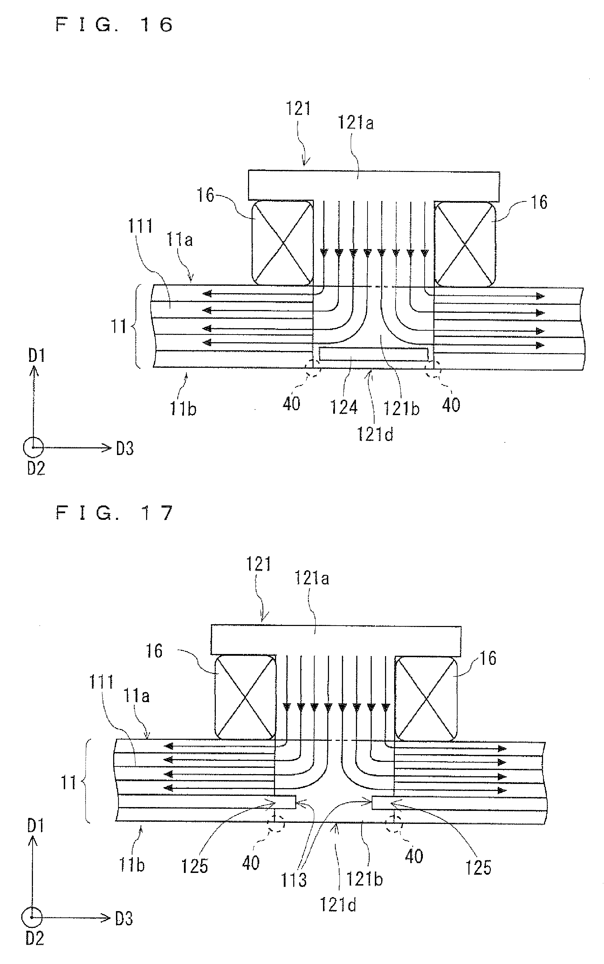

FIG. 16 is a cross-sectional view showing a conceptual configuration of an example of an armature according to the fourth embodiment in the direction D3 at the position across one of the magnetic plates 121. The magnetic plates 121 are laminated in the radial direction. Further, each of a plurality of magnetic plates 121 includes a slit 124 that penetrates through itself in the lamination direction D2 (radial direction) on the side opposite to the extending part 121a in the rotation axis direction D1. For example, the slit 124 has an elongated shape with the direction D3 (circumferential direction) being a longitudinal direction.

Further, the points 40 are positioned at one end 121d of the magnetic plate 121 on the side opposite to the extending part 121a in the rotation axis direction D1. As a more specific example, the points 40 are the points including an end on the surface 11b side of the edge of the boundary surface 122 positioned at the end in the direction D3 and a boundary between the surfaces 11b and 11c.

A magnetic flux flows inside the tooth 12 (magnetic plate 121) along the rotation axis direction D1 and then flows inside the back yoke 11 along the circumferential direction (direction D3). In the armature shown in FIG. 16, the slit 124 functions as a magnetic resistance and is provided on the extending part 121a side with respect to the points 40. Accordingly, among magnetic fluxes flowing through the tooth 12 and the back yoke 11, the magnetic fluxes passing through the points 40 can be reduced. Therefore, the magnetic fluxes are unlikely to pass through the welded points 40, with the result that deterioration of magnetic properties as an armature can be reduced.

Alternatively, the slit 124 may have a half moon shape in which, for example, a circular arc part is positioned on the surface 11a side. In this case, the slit 123 can easily lead the magnetic flux flowing through the tooth 12 toward the circumferential direction.

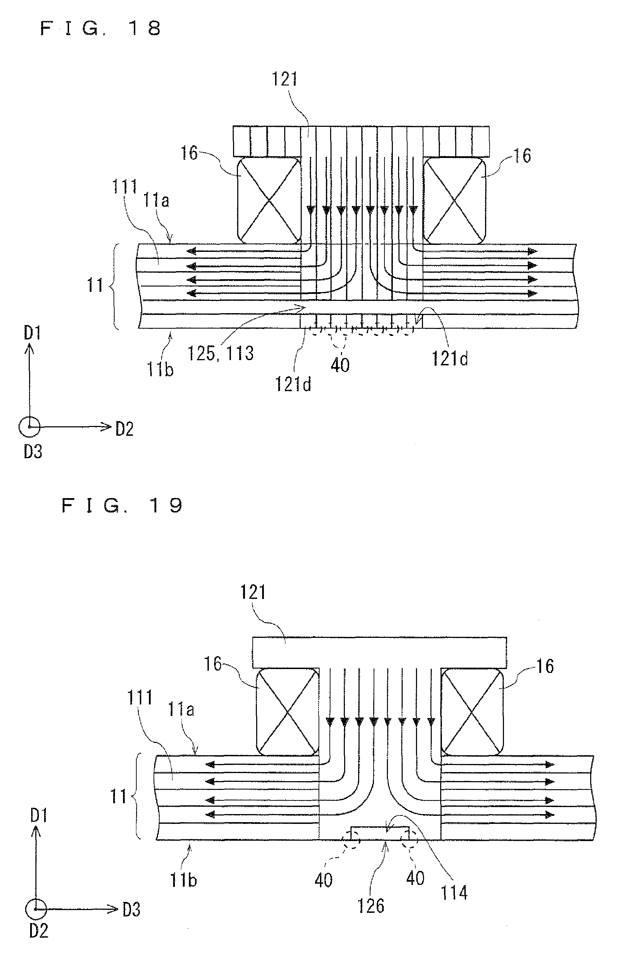

FIG. 17 is a conceptual cross-sectional view showing another example of the armature according to the fourth embodiment at the same position as that of the cross section shown in FIG. 16. Compared with the armature shown in FIG. 16, each of a plurality of magnetic plates 121 includes recessed parts 125. Though the slit 124 is not provided, the slit 124 may be provided. The plurality of magnetic plates 121 may be laminated in the circumferential direction and may be laminated in the radial direction. FIG. 17 shows the case where the magnetic plates 121 are laminated in the radial direction. FIG. 18 shows a conceptual configuration of an armature in a case where the magnetic plates 121 are laminated in the circumferential direction. FIG. 18 illustrates the mode in which a plurality of magnetic plates 121 are laminated in the circumferential direction. That is, the lamination direction D2 coincides with the circumferential direction.

Also in the armatures shown in FIGS. 17 and 18, the recessed parts 125 are positioned on the side opposite to the extending part 121a in the rotation axis direction D1 and are open toward the back yoke 11 side in the direction D3. In addition, the points 40 are positioned at the one end 121d of the magnetic plate 121 on the side opposite to the extending part 121a in the rotation axis direction D1. The extending part 121a, the recessed parts 125 and the points 40 are arranged in the rotation axis direction D1 in this order.

The recessed parts 125 function as a magnetic resistance and are provided on the extending part 121a side with respect to the points 40, whereby it is possible to reduce the magnetic fluxes passing through the points 40 of the magnetic fluxes passing through the tooth 12 and the back yoke 11. Therefore, the magnetic fluxes are unlikely to pass through the welded points 40, whereby deterioration of magnetic properties as an armature can be reduced.

Further, the hole 112 includes recessed parts 113 fitted with the recessed parts 125. Fitting as described above is achieved by, for example, causing the hole 112 to be open toward the radial direction and inserting the tooth 12 into the hole 112 along the radial direction. The recessed parts 125 are fitted with the recessed parts 113, and thus the positions of the recessed parts 113 can be employed as the reference for positioning of the tooth 12 with respect to the back yoke 11. The recessed parts 113 in the hole 112 are obtained by projections of the magnetic plate 111.

FIG. 19 is a conceptual cross-sectional view showing another example of the armature according to the fourth embodiment at the same position as that of the cross section shown in FIG. 16. Compared with the armature shown in FIG. 16, each of a plurality of magnetic plates 121 includes a recessed part 126. While the slit 124 is not provided, the slit 124 may be provided. Note that the plurality of magnetic plates 121 are laminated in the radial direction.

The recessed part 126 is provided at the one end 121d of the magnetic plate 121 on the side opposite to the extending part 121a in the rotation axis direction D1 and is open toward the side opposite to the extending part 121 a at the center of the magnetic plate 121 in the circumferential direction.

The hole 112 has a recessed part 114 fitted with the recessed part 126. Then, both ends of the recessed part 126 in the circumferential direction of the one end 121d are exposed on the surface 11b side through the hole 112.

The points 40 are positioned at a boundary between the recessed parts 126 and 114. More specifically, the points 40 are positioned at the end on the surface 11b side of the boundary between the recessed part 126 and the recessed part 114. The recessed part 114 in the hole 112 is achieved by the projection of the magnetic plate 111. The projection is connected to other part of the magnetic plate 111 on an outer circumferential side or an inner circumferential side with respect to the hole 112.

A magnetic flux flows, for example, inside one tooth 12 (magnetic plate 121) along the rotation axis direction D1, branches into directions opposite to each other in the circumferential direction, and then flows inside the back yoke 11 along the circumferential direction. The points 40 are positioned on the center side of the magnetic plate 121 in the circumferential direction, and thus magnetic fluxes are unlikely to pass through the points 40, which reduces the deterioration of magnetic properties as an armature. Note that the configuration shown in FIG. 19 can also be regarded as the configuration in which the slit 124 shown in FIG. 16 is open on the surface 11b side. Further, the position of the recessed part 114 can be used as a reference for positioning of the tooth 12 with respect to the back yoke 11.

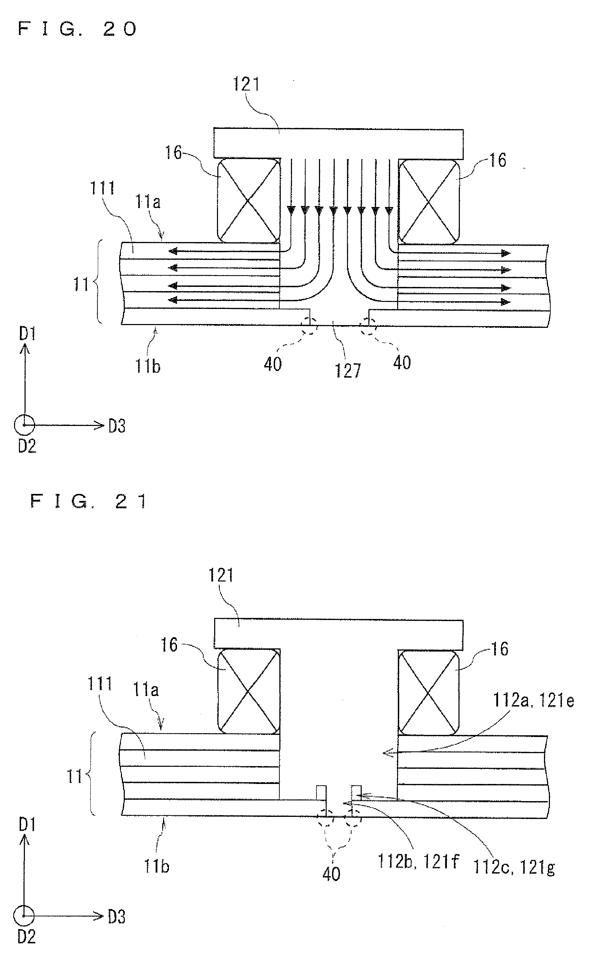

FIG. 20 is a conceptual cross-sectional view showing another example of the armature according to the fourth embodiment at the same position as that of the cross section shown in FIG. 16. Compared with the armature shown in FIG. 16, each of a plurality of magnetic plates 121 has a projection 127. While the slit 124 is not provided, the slit 124 may be provided. Note that a plurality of magnetic plates 121 are laminated in the radial direction.

The projection 127 is provided at the one end 121d of the magnetic plate 121 on the side opposite to the extending part 121a in the rotation axis direction D1. In addition, it projects toward the side opposite to the extending part 121 a at the center of the magnetic plate 121 in the circumferential direction.

The projection 126 is inserted through the hole 112.

The points 40 are positioned in the projection 126. More specifically, the points 40 are the points including, for example, the end of the projection 126 in the rotation axis direction D1 and the boundary between the surfaces 11b and 11c. The points 40 are positioned on the center side of the magnetic plate 121 in the circumferential direction, and thus magnetic fluxes are unlikely to pass through the points 40, which reduces the deterioration of magnetic properties as an armature. The configuration shown in FIG. 20 can be regarded as the configuration in which the recessed parts 125 shown in FIG. 17 are open also toward the surface 11b side. Further, the position of the hole 112 through which the projection 126 is inserted can be used as a reference for positioning of the tooth 12 with respect to the back yoke 11.

### Fifth Embodiment

An object of an armature core according to a fifth embodiment is to reduce deformations of the magnetic plates 121 and the back yoke 11 resulting from welding.

FIG. 21 is a conceptual cross-sectional view showing an example of an armature according to the fifth embodiment at the same position as that of the cross section shown in FIG. 4.

The hole 112 includes holes 112a and 112b and recessed parts 112c. The hole 112a extends from the surface 11a along the rotation axis direction D1. The hole 112b extends from the hole 112a along the rotation axis direction D1 to reach the surface 11b, and has a width smaller than the width of the hole 112a in the direction D3. The recessed parts 112c are open toward the surface 116 side in the rotation axis direction D1, at the boundary between the holes 112a and 112b. More specifically, for example, the recessed parts 112c are formed on the surface 11c that links the surface 11c forming the hole 112a and the surface 11c forming the hole 112b.

Each of a plurality of magnetic plates 121 includes insertion parts 121e and 121f and recessed parts 121 g. The insertion part 121e is inserted through the hole 112a. The insertion part 121f is inserted through the hole 112b. The recessed parts 121g are fitted with the recessed parts 112c. The corners do not become complete corners due to punching of the tooth 12 but have curvature, and thus the recessed parts 121g are provided for avoiding the curvature (projected parts of the back yoke 11 are not fitted with the recessed parts 121g, and an edge of the back yoke 11 has no corner, whereby the tooth 12 becomes floated when the corners of the recessed parts 121 g are provided with curvature).

Between the back yoke 11 and the magnetic plates 121, welding is performed at the points 40 that are points including an end on the surface 11b side of the edge of the insertion part 121f positioned at the end in the direction D3 (in other words, edge on the surface 11c side of the insertion part 121f) and the boundary between the surfaces 11 b and 11c. In other words, the points 40 can be regarded to be positioned at a boundary between the insertion part 121f and the hole 121 b.

The recessed parts 121g that are open toward the surface 11b side in the rotation axis direction D1 and the recessed parts 112c are fitted with each other, and thus it is possible to reduce deformations of the back yoke 11 and the magnetic plates 121 in the direction perpendicular to the rotation axis direction D2 when welding is performed at the points 40.

### Sixth Embodiment

An armature according to a sixth embodiment is an armature in a case where a reinforcing plate is provided.

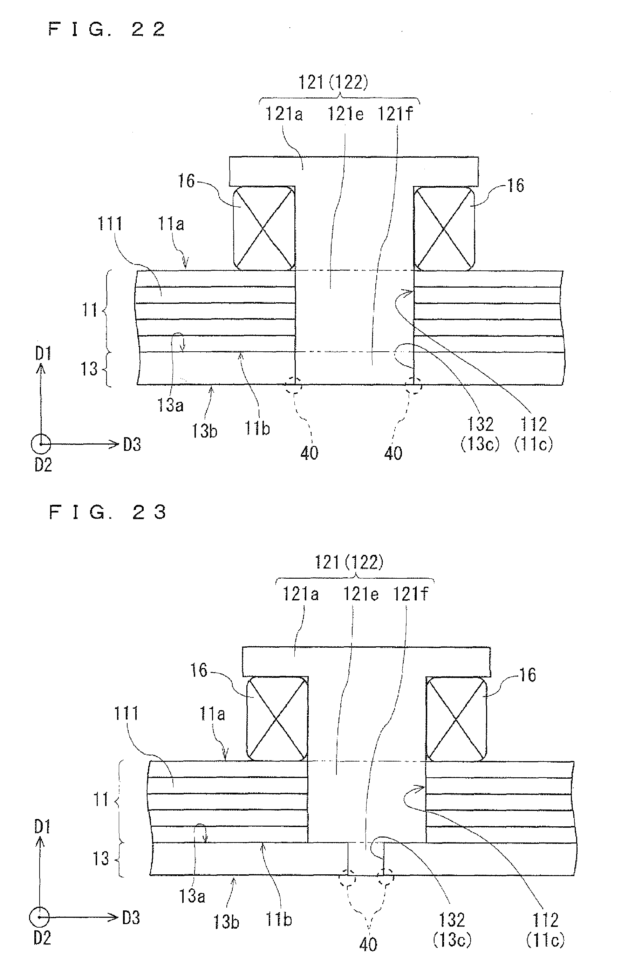

FIG. 22 is a conceptual cross-sectional view showing an example of the armature according to the sixth embodiment at the same position as that of the cross section shown in FIG. 4.

The armature further includes a reinforcing plate 13. The reinforcing plate 13 is separate from the back yoke 11 and includes surfaces 13a and 13b facing each other in the rotation axis direction D1. The surface 11b and the surface 13a are caused to face each other in the rotation axis direction D1 and mounted onto the back yoke 11. The back yoke 11 and the reinforcing plate 13 are fixed to each other with, for example, an adhesive.

In addition, the reinforcing plate 13 includes a plurality of holes 132 that penetrate through the surfaces 13a and 13b. The plurality of holes 132 are respectively continuous from the plurality of holes 112 in the rotation axis direction D1. Here, the surface forming the hole 132 is referred to as a surface 13c. Further, a set of the back yoke 11 and the reinforcing plate 13 is regarded as the yoke including the surfaces 11a and 13b facing each other in the rotation axis direction D1 and the holes 112 and 132 that penetrate through the surfaces 11a and 13b. The yoke can be viewed as a magnetic body as a whole irrespective of whether the reinforcing plate 13 is a magnetic body. Even when the reinforcing plate 13 is a magnetic body, it is desirable that the back yoke 11 be sufficiently thick and reinforcing plate 13 do not act as a magnetic path.

A magnetic flux does not pass through the reinforcing plate 13 if the reinforcing plate 13 is formed of non-magnetism (for example, stainless steel). Accordingly, a magnetic flux is not deteriorated even if one which has not been subjected to the processing of reducing eddy current is used as the reinforcing plate 13. Here, the one which has been subjected to the processing of reducing eddy current is, for example, laminated steel plates laminated in the rotation axis direction D1 or a dust core formed by intentionally containing an insulator.

The tooth 12 is fitted through the holes 112 and 132.

The reinforcing plate 13 is formed of weldable material, for example, steel plate, and the reinforcing plate 131 and the magnetic plates 121 are welded to each other at the points 40. The points 40 are located at positions at which the edge of the boundary surface 122 of the magnetic plates 121 adjacent in the lamination direction D2 and the surface 13c are close to each other and are exposed on the surface 13b side. More specific example is described. The portion of the boundary surface 122, which is inserted into the reinforcing plate 13, is referred to as an insertion part 122f. Welding is performed at the points 40 including the end in the rotation axis direction D1 of the edge of the insertion part 122f positioned at the end in the direction D3 and the boundary between the surfaces 13b and 13c.

Even in such a case, fixing of the magnetic plates 121 and fixing of the teeth 12 and the reinforcing plate 13 can be achieved by the same welding. Further, the strength of the armature core 1 can be improved by the reinforcing plate 13. In view of the strength of the armature core 1, it is desirable that the thickness of the reinforcing plate 13 in the rotation axis direction D1 be larger than the thickness of the magnetic plate 111 in the rotation axis direction D1 if the materials for the magnetic plate 111 and the reinforcing plate 13 are the same. The back yoke 11 laminates extremely thin steel plates, and the bonding of the laminations is twining at specific points, welding at specific points or adhesion, whereby the bonding strength between laminations is small. Accordingly, it is possible to ensure the strength of the armature by the reinforcing plate 13 having the thickness larger than the thickness of the magnetic plate 111 in the rotation axis direction D 1.

Further, the reinforcing plate 13 and the teeth 12 are welded to be fixed, and thus the metal difficult to be welded may be used as the back yoke 11. For example, a dust core may be used as the back yoke 11.

FIG. 23 is a conceptual cross-sectional view showing another example of the armature according to the sixth embodiment at the same position as that of the cross section shown in FIG. 22.

The magnetic plates 121 are laminated in the radial direction. The insertion part 121f extends from the center of the insertion part 121e in the circumferential direction, has a width smaller than the width of the insertion part 121e in the circumferential direction, and is inserted through the hole 132.

Between the reinforcing plate 13 and the magnetic bodies 121, welding is performed at the points 40 at which the edge of the boundary surface 122 and the surface 13c are close to each other and are exposed on the surface 13b side. More specifically, the points 40 are the points including, for example, an end positioned on the surface 11b side in the rotation axis direction D1 of the edge of the insertion part 122f positioned at the end in the circumferential direction and the boundary between the surfaces 11b and 11c.

The magnetic flux flowing from the tooth 12 to the back yoke 11 leads toward the teeth 12 adjacent in the circumferential direction. The insertion part 121e in the circumferential direction is large, and thus the magnetic flux is likely to flow through the back yoke 11 in the circumferential direction and unlikely to flow through the magnetic plate 13 even by using a magnetic body as the reinforcing plate 13. Therefore, an eddy current is unlikely to be generated in the reinforcing plate 13, and a degree of freedom increases in selecting a material for the reinforcing plate 13. For example, a thick steel plate can be used. Considering welding to the teeth 12, in particular, it is desirable that the reinforcing plate 13 be iron.

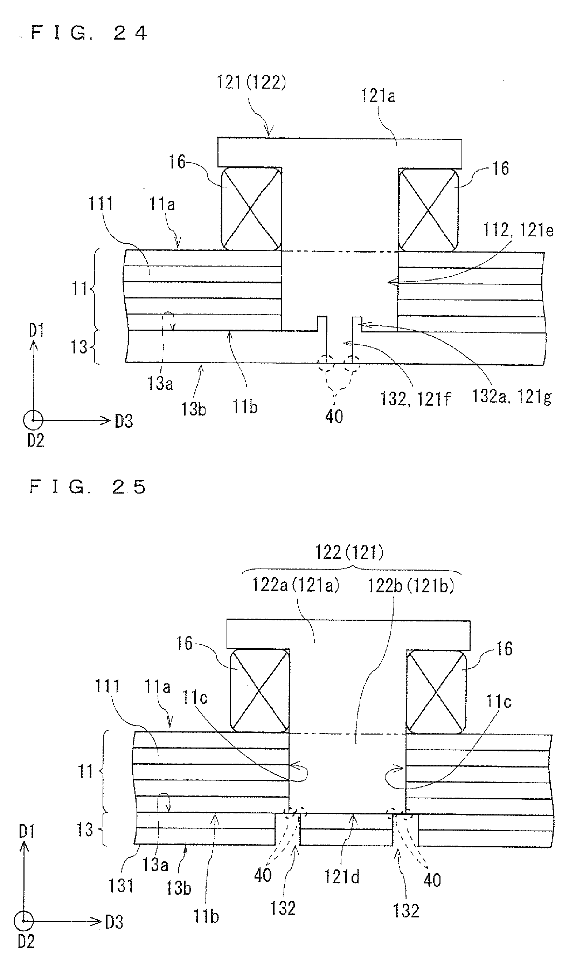

FIG. 24 is a conceptual cross-sectional view showing another example of the armature according to the sixth embodiment at the same position as that of the cross section shown in FIG. 23.

The width of the hole 132 in the direction D3 is smaller than the width of the hole 112 in the direction D3. Provided on the surface 13a are projections 132a projecting toward the surface 11a side along the rotation axis direction D1 at the positions within the hole 112. In other words, a set of the holes 112 and 132 has the recessed parts 132a that are open toward the surface 13b side along the rotation axis direction D1, at the boundary between the hole 112 and the hole 132. The recessed part 132 is achieved by a projection of the reinforcing plate 13.

Each of a plurality of magnetic plates 121 includes the recessed parts 121g fitted with the recessed parts 132a. Specifically, the recessed parts 121g are provided at the boundary between the insertion parts 121e and 121f.

In the armature with the above-mentioned configuration, the recessed parts 132a that are open in the rotation axis direction D1 and the recessed parts 121g are fitted with each other, and thus it is possible to reduce deformations of the reinforcing plate 13 and the magnetic plates 121 in the direction perpendicular to the rotation axis direction D2 in performing welding at the points 40. In addition, the projections 132a of the reinforcing plate 13 are fitted with the recessed parts 121g of the tooth 12, and accordingly function as ribs and also have an effect of increasing the strength even in a case where the thickness of the reinforcing plate 13 is small.

FIG. 25 is a conceptual cross-sectional view showing another example of the armature according to the sixth embodiment at the same position as that of the cross section shown in FIG. 22.

The surface 13a is in contact with a part of the one end 121d of the magnetic plate 121 in the rotation axis direction D1. Other part of the one end 121 d is partially exposed toward the surface 13b side through the holes 132. The tooth 12 is not inserted through the holes 132. In other words, the tooth 12 includes the extending part 121a around which the armature coil 16 is wound and the insertion part 121b inserted only through the back yoke 11.

Between the back yoke 11 and the magnetic plates 121, welding is performed at the points 40 at which the edge of the boundary surface 122 and the surface 11c are close to each other and are exposed on the surface 11b (13c) side. More specifically, the reinforcing plate 13 and the magnetic plates 121 are welded to each other at the points 40 serving as a boundary between the edge of the insertion part 122b positioned at the end in the rotation axis direction D1 and the surface 11c forming the surface 132. Note that only the portion of the edge of the insertion part 122b positioned at the end in the rotation axis direction D 1 (portion out of figure) may be welded if bonding between the back yoke 11 and the reinforcing plate 13 is strong.

Accordingly, fixing of the magnetic plates 121 and fixing of the teeth 12 and the reinforcing plate 13 are achieved by welding at the points 40.

Further, the surface 13a is in contact with the one end 121d of the magnetic plate 121 in the rotation axis direction D1, whereby it is possible to improve positioning accuracy of the teeth 12 with respect to the back yoke 11 in the rotation axis direction D1.

Further, FIG. 25 illustrates the case where the holes 132 are provided at the positions at which the boundary between the surface 11b and the magnetic plate 121 is exposed. In this case, the back yoke 11 and the magnetic plates 121 may be welded to each other at the points 40 including the end on the surface 13b side of the edge of the insertion part 122b in the direction D3 and the boundary between the surfaces 11 b and 11c. In this case, fixing of the magnetic plates 121 and fixing of the teeth 12 and the back yoke 11 are achieved by the welding at the points 40.

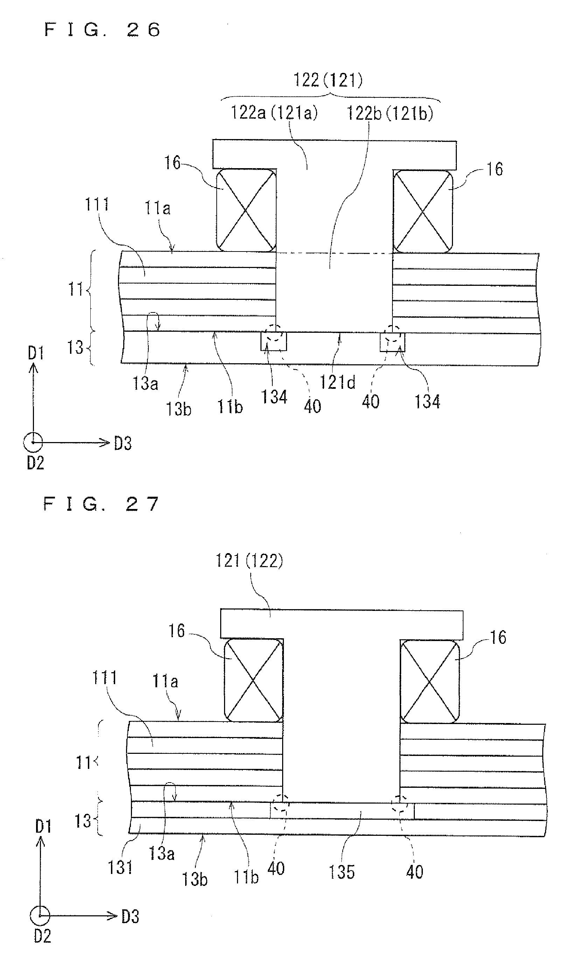

FIG. 25 illustrates the case where the reinforcing plate 13 includes a plurality of magnetic plates 131 laminated along the rotation axis direction D1. While the reinforcing plate 13 is not necessarily required to include a plurality of magnetic plates 131, those make the material common to that of the magnetic plate 111 included in the back yoke 11. The description above is similar to FIFS. 22 to 24 described above and FIGS. 26 to 28 described below.

FIG. 26 is a conceptual cross-sectional view showing another example of the armature according to the sixth embodiment at the same position as that of the cross section shown in FIG. 25.

Compared with the armature shown in FIG. 25, the reinforcing plate 13 includes holes 134 in place of the holes 132. The holes 134 are provided on the surface 13a side to cover the points 40. Note that the points 40 are the points including an end in the rotation axis direction D1 of the edge of the insertion part 122b positioned at the end in the direction D3 and the boundary between the surfaces 11b and 11c. The reinforcing plate 13 is mounted to the back yoke 11 after the tooth 12 is inserted through the hole 112 to weld the back yoke 11 and the magnetic plates 121 to each other at the points 40.

The holes 134 cover the points 40, whereby it is possible to reduce or avoid the generation of a gap between the back yoke 11 and the reinforcing plate 13 by means of bulges of welding at the points 40. As a result, fixing of the back yoke 11 and the reinforcing plate 13 can be facilitated with, for example, an adhesive. Here, while the hole 134 functions as a recess on the assumption that the welding part bulges, the hole 134 is not required in a case where the welding part does not bulge in laser welding.

Further, a gap may be provided between the one end 121d of the magnetic plate 121 and the reinforcing plate 13 in the rotation axis direction D1. The gap functions as a magnetic resistance, and thus the magnetic flux flowing from the tooth 12 to the reinforcing plate 13 can be reduced. From the viewpoint that fixing of the back yoke 11 and the reinforcing plate 13 is facilitated, however, it is desirable that the gap between the back yoke 11 and the reinforcing plate 13 be small. Description is given below by way of a specific example.

FIG. 27 is a conceptual cross-sectional view showing another example of the armature according to the sixth embodiment at the same position as that of the cross section shown in FIG. 26.

Compared with the armature shown in FIG. 26, the reinforcing plate 13 includes a hole 135 in place of the holes 134. The hole 135 is provided in the region overlapping the tooth 12 in the rotation axis direction D1 on the surface 13a and is open toward the surface 11b side. With the hole 135, a gap can be formed between the one end 121d of the magnetic plate 121 and the reinforcing plate 13. The hole 135 can be regarded as follows; the holes 134 are caused to communicate with each other and separate the one end 121 d from the reinforcing plate 13.

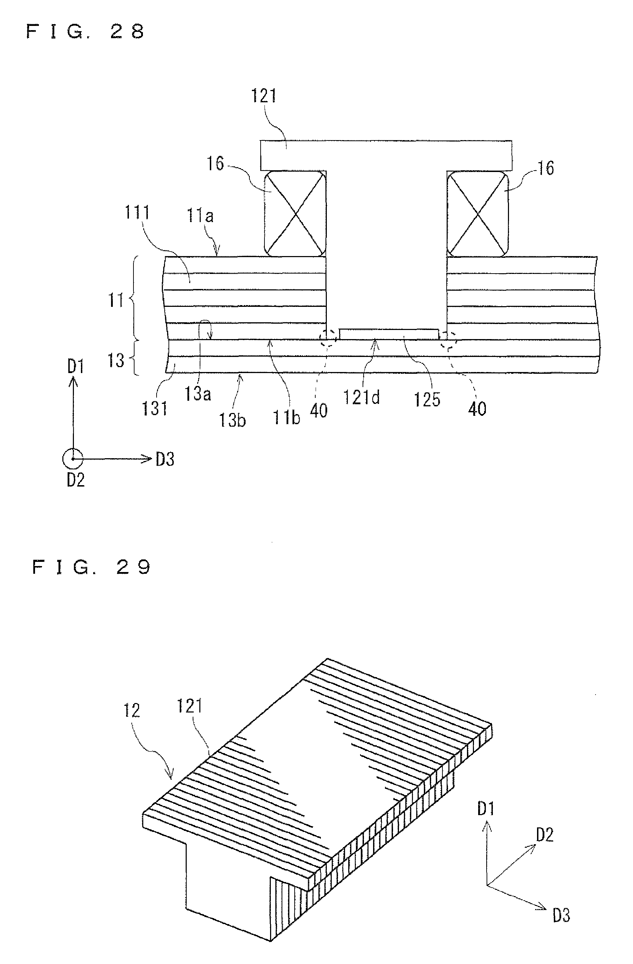

FIG. 28 is a conceptual cross-sectional view showing another example of the armature according to the sixth embodiment at the same position as that of the cross section shown in FIG. 27.

Compared with the armature shown in FIG. 27, a hole is not provided to the reinforcing plate 13. The magnetic plate 121 includes the recessed part 125 that is open toward the reinforcing plate 13 side on the one end 121d side.

With the recessed part 125, a gap can be formed between the one end 121d of the magnetic plate 121 and the reinforcing plate 13.

In order to prevent the generation of a gap between the back yoke 11 and the reinforcing part 13 by the bulges due to welding at the points 40, the holes 132 shown in FIG. 25 or the holes 134 shown in FIG. 26 may be provided in the surface 13a.

Further, in the armature shown in FIG. 6, for example, the reinforcing plate 13 may be mounted onto the back yoke 11 so as to face the surface 11 b side. Even in this case, a gap can be provided between the tooth 12 and the reinforcing plate 13.

As described above, in a case where a gap is provided between the tooth 12 and the reinforcing plate 13, the gap functions as a magnetic resistance, whereby it is possible to reduce the magnetic flux flowing from the tooth 12 to the reinforcing plate 13.

Note that the back yoke 11 and the magnetic plates 121 may be welded to each other on the surface 11 a side in place of the points 40 shown in FIGS. 27 and 28. Even in this case, the magnetic flux flowing toward the reinforcing plate 13 can be reduced.

The description has been given assuming that the back yoke 11 and the reinforcing plate 13 are fixed to each other with, for example, an adhesive, which is not limited thereto. For example, the side surface of the back yoke 11 having a circular shape with the rotation axis P being the center and the side surface of the reinforcing plate 13 having a circular shape with the rotation axis P being the center in the same manner may be fixed by welding. Alternatively, for example, there may be provided a hole penetrating through the back yoke 11 and the reinforcing plate 13 along the rotation axis direction D1, and the back yoke 11 and the reinforcing plate 13 may be connected to each other with a caulking pin or a caulking bolt. As a result, the reinforcing plate 13 and the back yoke 11 can be fixed.

### Seventh Embodiment

The tooth 12 is described in a seventh embodiment.

FIG. 29 is a conceptual perspective view of one tooth 12 in an example of an armature according to the seventh embodiment.

The magnetic plates 121 each have the same shape when viewed from the lamination direction D2. A plurality of magnetic plates 121 as described above are easily manufactured because they can be manufactured by punching through a predetermined steel plate with the same punching member. Further, the side surfaces of the tooth 12 positioned at both ends in the direction D3 are linear in the lamination direction D2.

In the hole 112 through which the tooth 12 is inserted, side surfaces positioned at both ends in the direction D3 are linear in the lamination direction D2. Accordingly, the clearance between the tooth 12 and the back yoke 11 is likely to be set in an appropriate manner, which facilitates welding. In addition, the clearance between the armature coil 16 and the tooth 12 can be appropriately set as well.

Further, in cases where the widths of the respective magnetic plates 121 in the direction D3 become larger along the lamination direction D2 as shown in, for example, FIGS. 3 and 11, the armature coil 16 is easily wound around each of them. Further, the teeth 12 can be arranged in the circumferential direction to have a smaller diameter by arranging sides having a smaller width on the rotation axis P side, or by alternately arranging sides having a smaller width and sides having a larger width in the circumferential direction.

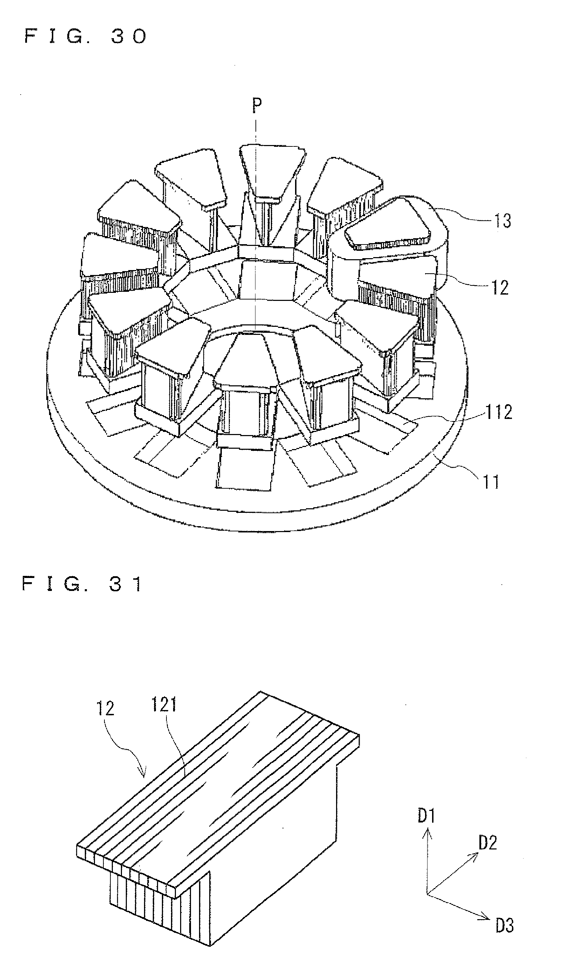

From the viewpoint that the clearance between the tooth 12 and the back yoke 11 is appropriately set, the respective magnetic plates 121 do not necessarily have the same shape when viewed from the lamination direction D2. FIG. 30 is a conceptual exploded perspective view showing another example of the armature according to the seventh embodiment. However, FIG. 30 shows only one armature coil 16.

The portion of the tooth 12, which is inserted into the hole 112, has a rectangular cross section in cross section perpendicular to the rotation axis P. In other words, in the portion of the tooth 12, each of which is inserted into the hole 112, a plurality of magnetic plates 121 each have the same shape when viewed from the lamination direction D1. In the portion of the tooth 12, which extends from the hole 112 to the direction opposite to the back yoke 11, the width in the direction D3 becomes larger as farther from the rotation axis P.

With the tooth 12 as described above, the armature coil 16 is easily wound, and the clearance between the tooth 12 and the back yoke 11 can be appropriately set.

In the first to sixth embodiments, the description has been mainly given of the case where the magnetic plates 121 are laminated in the radial direction. For example, in the case where the magnetic plates 121 are laminated in the radial direction with reference to FIG. 17, the magnetic resistance of the tooth 12 in the circumferential direction can be reduced. Accordingly, the magnetic flux flowing from the tooth 12 to the back yoke 11 is not blocked.

FIG. 31 is a conceptual perspective view of one tooth 12 of another example of the armature according to the seventh embodiment.

Compared with the tooth 12 shown in FIG. 29, the magnetic plates 121 are laminated in the circumferential direction. As a result, in a case where a field magnet is arranged at the position facing the tooth 12 in the rotation axis direction D1, the boundaries between the magnetic plates 121 extend along the radial direction even when the width of the field magnet in the radial direction is made larger than the width of the tooth 12. Accordingly, the magnetic flux from the field magnet can be caused to efficiently flow into the tooth 12.

### Eighth Embodiment

A modification of a welding diameter and a welding point is described in an eighth embodiment.

FIG. 5 shows the points 40 extending along the radial direction, which means that welding is performed continuously in the radial direction. On the other hand, in FIG. 12, the point 40 at which a first boundary surface 122 and the surface 11c are close to each other is apart from the point 40 at which a second boundary surface 122 adjacent to the first boundary surface 122 in the lamination direction D2 and the surface 11c are close to each other. In other words, a welding diameter at the point 40 for each boundary surface 122 is smaller than the width of the magnetic plate 121 in the lamination direction D2. Welding as described above is achieved by, for example, laser welding. In such a case, welding is not repeated at the adjacent points 40, whereby it is possible to reduce distortions of relative positions of the magnetic plates 121 and the back yoke 111 due to welding.

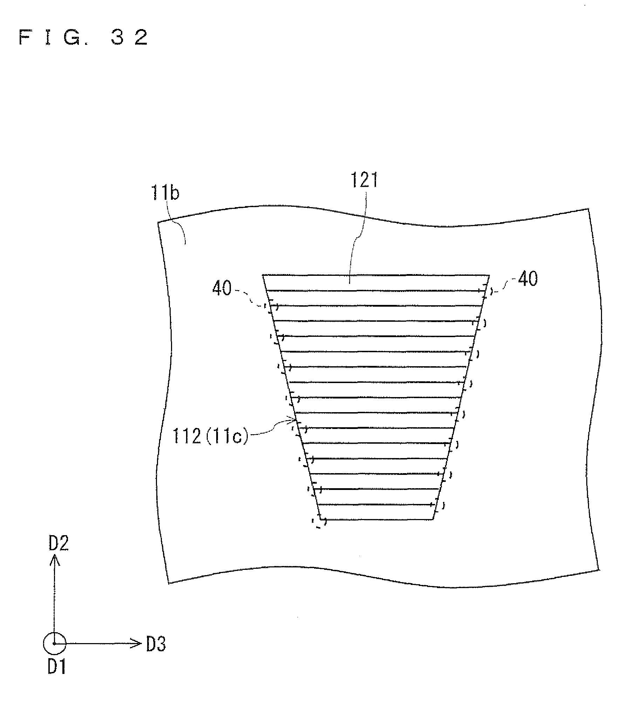

FIG. 32 is a conceptual plan view showing another example of the armature at the same position as that of the plan view shown in FIG. 12, Compared with the armature described with reference to FIG. 12, the armature shown in FIG. 32 is the same except for the points 40. In FIG. 32, the point 40 for a first boundary surface 122 is positioned only at one end in the direction D3. In addition, the point 40 for a second boundary surface 122 adjacent to the first boundary surface 122 in the lamination direction D2 is positioned only at the other end in the direction D3. Further, as farther from the rotation axis P side, the points 40 for respective boundary surfaces 122 are alternately provided at one end and the other end. The welding diameter at the point 40 is smaller than double the width of the magnetic plate 121 in the lamination direction.

In the armature with the above-mentioned configuration, it is possible to reduce the eddy current generating in the tooth 12 through the points 40. Specific description is given below. In the tooth 12 shown in FIG. 12, a pair of adjacent magnetic plates 121 are electrically connected to each other at one ends and the other ends through the points 40. Accordingly, in the plan view shown in FIG. 12, an eddy current passing through the edge of the tooth 12 is generated through the points 40. On the other hand, in the tooth 12 shown in FIG. 32, respective points 40 are not positioned on the same side in the direction D3 in a manner that they are continuous in the radial direction, whereby it is possible to reduce the above-mentioned eddy current. Moreover, the welding diameter at the point 40 is not required to be smaller than the width of the magnetic plate 121 in the lamination direction.

In terms of a reduction of eddy current, the points 40 for the respective boundary surfaces 122 are not required to be alternately provided to one end and the other end as farther from the rotation axis P, and the point 40 for the boundary surface 122 is only required to be provided at any one of ends in the direction D3. As long as the points 40 are alternately provided at one end and the other end, however, the stress generated due to welding acts on the tooth 12 more evenly compared with the case where the points 40 are provided only to any of the ends. Therefore, it is possible to reduce a distortion of the relative position of the tooth 12 with respect to the back yoke 11.

While FIGS. 12 and 32 illustrate the points 40 on the surface 11b side, the same holds true for the case where the magnetic plates 121 and the back yoke 11 are welded to each other at the points 42 on the surface 11a side.

### Ninth Embodiment

As to an armature according to a ninth embodiment, description is given of an insulating member interposed between the teeth and the armature coils.

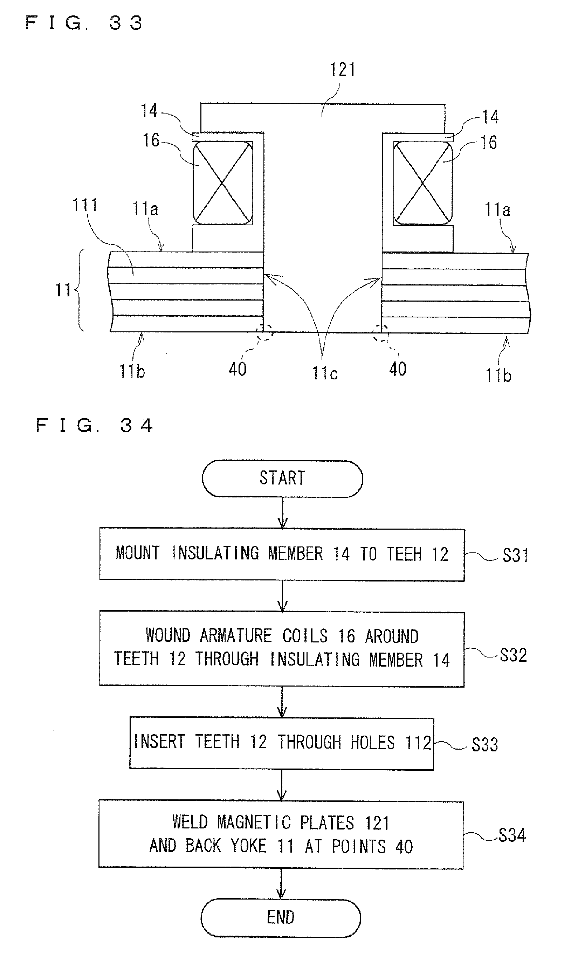

FIG. 33 is a cross-sectional view showing a conceptual configuration of an example of the armature according to the ninth embodiment at the same position as that of the cross section shown in FIG. 4.

Compared with the armature shown in FIG. 4, there is further provided an insulating member 14. The insulating member 14 is interposed between the armature coils 16 and the teeth 12 and between the armature coils 16 and the back yoke 11. The thickness of the insulating member 14 positioned between the armature coil 16 and the back yoke 11 is larger than the thickness of the insulating member 14 between the armature coil 16 and the tooth 12.

FIG. 34 is a flowchart showing a method of manufacturing the armature shown in FIG. 33. In Step S31, the insulating member 14 is mounted to the teeth 12 in the state in which the magnetic plates 121 are laminated. In this case, it is desirable that the magnetic plates 121 be fastened temporarily. Then, in Step S32, the armature coils 16 are wound around the teeth 12 through the insulating member 14. Then, in Step S33, the teeth 12 are inserted through the holes 112. Then, in Step S34, the back yoke 11 and the magnetic plates 121 are welded to each other at the points 40.

The armature shown in FIG. 33 can be manufactured as described above. In the armature shown in FIG. 33, the insulating member 14 has a larger thickness between the armature coil 16 and the back yoke 11 than a thickness between the armature coil 16 and the tooth 12, with the result that the welding heat at the points 40 is unlikely to be transmitted to the armature coils 13 through the back yoke 11.

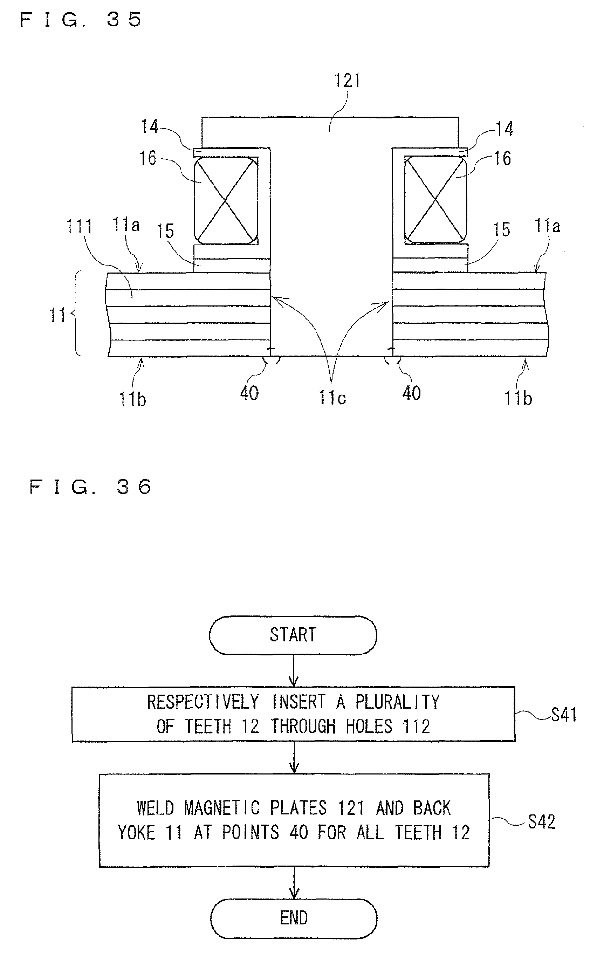

FIG. 35 is a cross-sectional view showing a conceptual configuration of another example of the armature according to the ninth embodiment in the same cross section as that of the armature shown in FIG. 33.

Compared with the armature shown in FIG. 33, there is further provided a film 15. The film 15 is interposed between the insulating member 15 and the back yoke 11. The film 15 has a heat conductivity lower than that of the back yoke 11.

The armature shown in FIG. 35 can be manufactured in the same procedure as that of the flowchart shown in FIG. 34 except for Step S33. In Step S33, the film 15 is placed on the surface 11a, and then the teeth 12 are inserted through the holes 112.

The armature shown in FIG. 35 can be manufactured as described above. In the armature shown in FIG. 35, the film 15 is interposed between the armature coils 16 and the back yoke 11, and thus the welding heat at the points 40 is unlikely to be transmitted to the armature coils 13 through the back yoke 11.

### Tenth Embodiment

In a tenth embodiment, the procedure of performing welding on a plurality of teeth 12 is described. Here, description is given by taking the armature described with reference to FIG. 1 to FIG. 5 as an example. Note that any of the armatures according to the first to ninth embodiments described above may be used. In the armature shown in FIG. 1, twelve teeth 12 and twelve holes 112 are illustrated. In addition, twelve teeth 12 and twelve holes 112 are respectively arranged at the same intervals around the rotation axis P.

FIG. 36 is a flowchart showing a method of manufacturing an armature core according to the tenth embodiment. First, in Step S41, the teeth 12 in which the magnetic plates 121 are laminated are all inserted through the holes 112. On this occasion, it is desirable that the magnetic plates 121 be temporarily fastened to each other.

Next, in Step S42, the back yoke 11 and the magnetic plates 121 are simultaneously welded to each other at the points 40 for all of the teeth 12. For example, for each of the teeth 12, the points 40 on both ends in the direction D3 may be welded at the same time, or the points 40 at one side in the direction D3 may be simultaneously welded and then the points 40 on the other side may be welded. Alternatively, in the cases where the points 40 are apart from each other as shown in FIGS. 12 and 32, the points 40 at the relatively same positions may be welded at the same time.

Though the force for making the members to be welded close to each other acts thereon, the holes 112 arranged at the same intervals and the teeth 12 are all welded at the same time, and thus the stress due to welding is mitigated as the entire armature core 1. As a result, it is possible to prevent the armature core 1 from deforming.

Note that all teeth are not necessarily required to be welded to each other at the same time in Step S42, and the back yoke 11 and the magnetic plates 121 may be welded to each other at the same time for three or more teeth 12 positioned at the same intervals. The armature core 1 can be prevented from deforming by welding three teeth at the same intervals in the circumferential direction.

For example, the armature coils 16 of three phases are wound around the teeth 12. More specifically, a U-phase armatures coil 16, a V-phase armature coil 16 and a W-phase armature coil 16 are individually wound around the teeth 12, which are repeatedly arranged in this state in the circumferential direction.

In the armature as described above, an armature can be manufactured through, for example, the following manufacturing method. Specifically, with reference to FIG. 36, among the teeth 12, the teeth 12 around which the armature coil 16 of one phase (for example, U-phase) is wound may be all inserted through the holes 112 in, for example, Step S41, and the back yoke 11 and the magnetic plates 121 may be welded to each other in Step S42. Then, in a similar manner, Steps S41 and S42 may be executed, for each phase, on the teeth 12 around which the armature coils 16 of different phases are wound. Accordingly, the teeth 12 are arranged at the same intervals for each phase in the circumferential direction, and hence it is possible to fix the teeth 12 for each phase while preventing the armature core 1 from deforming.

Further, in the armature shown in FIG. 1, a field element is arranged so as to face the teeth 12 in the rotation axis direction D1, whereby a rotating electric machine can be formed with the field element. The field element is circularly disposed around the rotation axis P and includes a plurality of field magnets that supplies a magnetic pole to the armature core 1. The plurality of field magnets supply magnetic poles different from each other in the circumferential direction.

In Step S42, for example, the same number of the teeth 12 arranged at the same intervals as the number of magnetic poles or the number of pairs of magnetic poles may be welded at the same time. However, it is desirable that this manufacturing method be used in a case where the number of the teeth 12 can be divided by the number of magnetic poles or the number of pairs of magnetic poles. Accordingly, it is possible to weld the teeth 12 to the back yoke 11 based on the number of magnetic poles supplied by the field element while preventing the armature core from deforming.

### Eleventh Embodiment

In an eleventh embodiment, description is given of shapes of a portion of the tooth 12 around which the armature coil 16 is wound (hereinafter referred to as the extending part 12a), a portion thereof inserted into the back yoke 11 (hereinafter referred to as the insertion part 12b), and a portion thereof inserted into the reinforcing plate 13 (hereinafter referred to as the insertion part 12c), in cross section perpendicular to the rotation axis P.

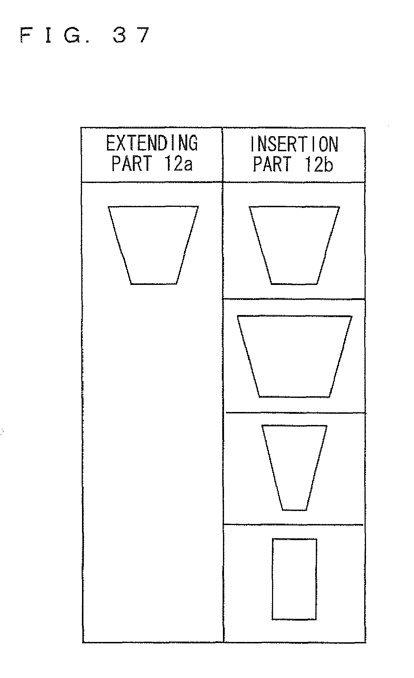

FIG. 37 shows the shapes of the extending part 12a and the insertion part 12b of the armature in which the reinforcing plate 13 is not provided or the armature in which the reinforcing plate 13 is provided but the teeth 12 are not inserted into the reinforcing plate 13. FIG. 37 shows four shapes of the insertion part 12b based on the shape of the extending part 12a. In FIG. 37, the extending part 12a has a shape in which the side surfaces positioned at both ends in the circumferential direction extend along the radial direction and a cross section thereof has a trapezoidal shape. Though not limited thereto, the cross section may have, for example, a rectangular shape. While punching is performed into the same shape in the case of a rectangular shape in the drawing, there may be provided corners in other cases. Alternatively, in order to mitigate an acute angle part, the width may change in a chamfered shape. Illustration is merely made in a square or a triangle in the drawing for simplification.

In a first mode, the extending part 12a and the insertion part 12b have the same shape. This is used in, for example, the armature shown in FIG. 2.

In a second mode, the width of the extending part 12a in the circumferential direction (expressed as a horizontal direction in the drawing) is smaller than the width of the insertion part 12b in the circumferential direction. In this case, it is preferred that in the state in which the armature coil 16 is wound around the extending part 12a, the ends of the insertion part 12b in the circumferential direction be positioned on the sides opposite to the extending part 12a with respect to the armature coil 16. As a result, as described with reference to FIG. 14, the teeth 12 can be welded to the back yoke 11 in the state in which the armature coils 16 are wound.

In a third mode, the width of the extending part 12a in the circumferential direction is larger than the width of the insertion part 12b in the circumferential direction. This is used in, for example, the armature shown in FIG. 15.

In a fourth mode, the cross section of the insertion part 12b has a rectangular shape, and the width thereof in the circumferential direction is smaller than an average of the width of the extending part 12a in the circumferential direction. As a result, the clearance between the tooth 12 and the back yoke 11 can be made excellent.

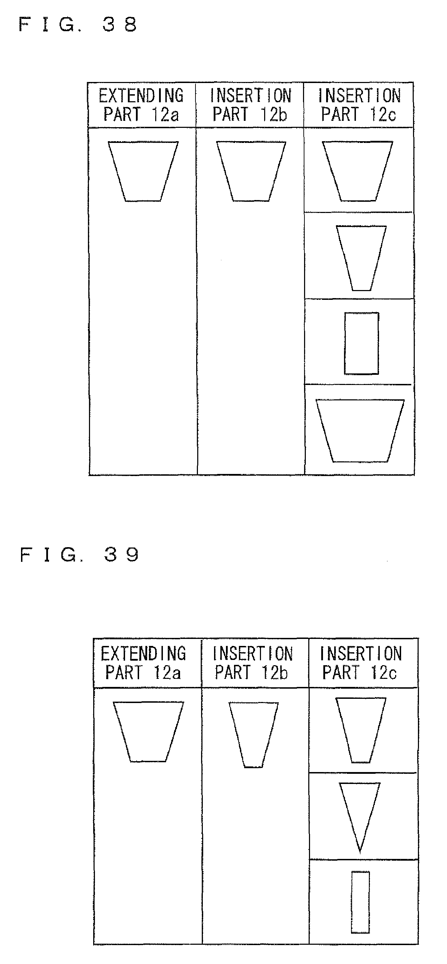

FIG. 38 to FIG. 41 show the shapes of the extending part 12a, the insertion parts 12b and 12c in the mode in which the reinforcing plate 13 is provided and the teeth 12 are inserted into the reinforcing plate 13. FIG. 38 to FIG. 41 also show the shapes of the insertion parts 12b and 12c based on the shape of the extending part 12a.

FIG. 38 shows a plurality of shapes of the insertion part 12c in the first mode shown in FIG. 37. In a first mode, the extending part 12a and the insertion parts 12b and 12c have the same cross-sectional shape. This is used in, for example, the armature shown in FIG. 22.

In a second mode, the widths of the extending part 12a and the insertion part 12b in the circumferential direction are larger than the width of the insertion part 12c in the circumferential direction. This is used in, for example, the armature shown in FIG. 23. As a result, the magnetic flux flowing through the reinforcing plate 13 can be reduced.

In a third mode, the cross section of the insertion part 12c has a rectangular shape, and the width thereof in the circumferential direction is smaller than the average of the widths of the extending part 12a and the insertion part 12b in the circumferential direction. Accordingly, as in the second mode of FIG. 38, the magnetic flux flowing through the reinforcing plate 13 can be reduced. In addition, as in the fourth mode of FIG. 37, the clearance between the tooth 12 and the reinforcing plate 13 can be made excellent.

In a fourth embodiment, the widths of the extending part 12a and the insertion part 12b in the circumferential direction are smaller compared with the cross section of the insertion part 12c in the circumferential direction. In the above-mentioned tooth 12, the armature core 1 can be assembled by, for example, inserting the teeth 12 into the holes 112 opening in the radial direction along the radial direction, and inserting the teeth 12 through the holes 132 of the reinforcing plate 13. Then, the insertion parts 12b are in contact with the back yoke 11 in the rotation axis direction D1. In the above-mentioned armature core 1, the insertion parts 12b are in contact with the back yoke 11, whereby it is possible to prevent the teeth 12 from falling out in the rotation axis direction D1. While FIG. 38 illustrates the case where the cross section of the insertion part 12c has a trapezoidal shape, it may have, for example, a rectangular shape.

FIG. 39 shows a plurality of shapes of the insertion part 12c in the third mode shown in FIG. 37. In a first mode, the insertion parts 12a and 12b each have the same cross-sectional shape.

In a second mode, the width of the insertion part 12c in the circumferential direction is smaller than the width of the insertion part 12b in the circumferential direction. Accordingly, the magnetic flux flowing through the reinforcing plate 13 can be reduced.

In a third mode, the cross section of the insertion part 12c has a rectangular shape, and the width thereof in the circumferential direction is smaller than an average of the widths of the extending part 12a and the insertion part 12b in the circumferential direction. Accordingly, as in the third mode of FIG. 38, the magnetic flux flowing through the reinforcing plate 13 can be reduced, and the clearance between the tooth 12 and the reinforcing plate 13 can be made excellent.

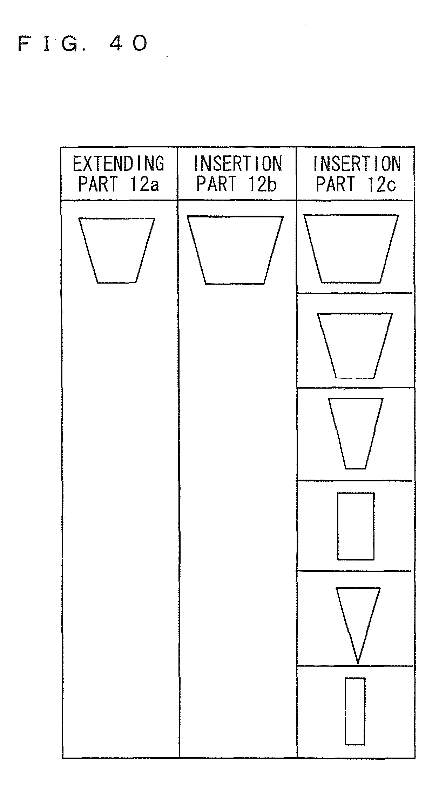

FIG. 40 shows a plurality of shapes of the insertion part 12c in the second mode shown in FIG. 37. The insertion parts 12b and 12c each have the same cross-sectional shape. Also in any of the modes shown in FIG. 40, it is preferred that in the state in which the armature coil 16 is wound around the extending part 12a, the ends of the insertion part 12b in the circumferential direction be positioned on the sides opposite to the extending part 12a with respect to the armature coil 16. Accordingly, the teeth 12 can be welded to the back yoke 11 in the state in which the armature coil 16 is wound.

In a first mode, the width of the insertion part 12c in the circumferential direction is smaller than the width of the insertion part 12b in the circumferential direction and is larger than the width of the extending part 12a in the circumferential direction.

In a second mode, the insertion part 12c has the same cross-sectional shape as that of the extending part 12a.

In a third mode, the cross section of the insertion part 12c has a rectangular shape, and the width thereof in the circumferential direction is equal to an average of the widths of the extending part 12a and the insertion part 12b in the circumferential direction. Accordingly, the clearance between the teeth 12 and the reinforcing plate 13 can be made excellent.

In a fourth mode, the width of the insertion part 12c in the circumferential direction is smaller than the width of the extending part 12a in the circumferential direction. Accordingly, the magnetic flux flowing through the reinforcing plate 13 can be reduced.

In a fifth mode, the cross section of the insertion part 12c has a rectangular shape, and the width thereof in the circumferential direction is smaller than an average of the widths of the extending part 12a and the insertion part 12b in the circumferential direction. Accordingly, the magnetic flux flowing through the reinforcing plate 13 can be reduced, and the clearance between the teeth 12 and the reinforcing plate 13 can be made excellent.

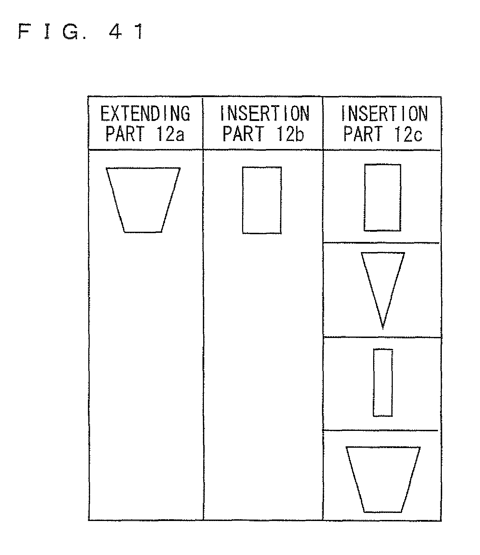

FIG. 41 shows a plurality of shapes of the insertion part 12c in the fourth mode shown in FIG. 37. In a first mode, the insertion parts 12b and 12c have the cross-sectional shape same ass each other. The clearance between the teeth 12 and the back yoke 11 or the reinforcing plate 13 can be made excellent. Also in any of the modes shown in FIG. 41, the clearance between the back yoke 11 and the teeth 12 can be improved.

In a second mode, the side surfaces of the insertion part 12c positioned at both ends in the circumferential direction have the shape along the radial direction, and the width of the insertion part 12c in the circumferential direction is smaller than the width of the insertion part 12b in the circumferential direction. As a result, the magnetic flux flowing through the reinforcing plate 13 can be reduced.

In a third mode, the cross section of the insertion part 12c has a rectangular shape, and the width thereof in the circumferential direction is smaller than the width of the insertion part 12b. Accordingly, the magnetic flux flowing through the reinforcing plate 13 can be reduced.

In a fourth mode, the width of the insertion part 12c in the circumferential direction is larger than the width of the insertion part 12b in the circumferential direction. As in the fourth mode shown in FIG. 38, it is possible to prevent the teeth 12 from falling out from the back yoke 11 in the rotation axis direction D1.

While FIG. 38 to FIG. 41 illustrate the cases where the cross section of the insertion part 12c has a trapezoidal shape, it may be, for example, a rectangular shape.

Though the armature and the manufacturing method therefor have been described in the first to eleventh embodiments, those may be appropriately combined.

While the invention has been shown and described in detail, the foregoing description is in all aspects illustrative and not restrictive. It is therefore understood that numerous modifications and variations can be devised without departing from the scope of the invention.

## Claims

1. An armature core, comprising:
a first magnetic body (11; 11+13) including:
a first surface (11a; 11a) and a second surface (11b; 13b) facing each other in a first direction (D1) parallel to a predetermined axis (P); and
a third surface (11c; 11c+13c) forming a plurality of holes (112, 112+132) penetrating through said first surface and said second surface in said first direction and circularly arranged around said axis; and
a plurality of second magnetic bodies (12) each including N magnetic plates (121) laminated in a second direction (D2) perpendicular to said axis and respectively inserted through said plurality of holes,
wherein, at at least one k-th point (40, 42) at which an edge of a boundary surface (122) between k-th and (k+1)th ones of said magnetic plates adjacent to each other in said second direction, where k represents a natural number between 1 and N-1, and said third surface are close to each other and are exposed on any one side of said first surface and said second surface, said k-th and said (k+1)th ones of said magnetic plates and said first magnetic body are welded to each other.

2. The armature core according to Claim 1, wherein each of said plurality of second magnetic bodies (12) includes an extending part (121a) extending on a side opposite to said second surface (11b) from said hole (112) on said first surface (11a) side along said first direction (D1).

3. The armature core according to Claim 2, wherein said at least one k-th point (40) is positioned at an end on said second surface (11b) side of a point at which said edge of said boundary surface (122) and said third surface (11c) are close to each other.

4. The armature core according to Claim 2, wherein said at least one k-th point (42) is positioned at an end on said first surface (11 a) side of a point at which said edge of said boundary surface (122) and said third surface (11c) are close to each other.

5. The armature core according to any one of Claims 1 to 4, wherein:
said first magnetic body (11) includes a plurality of second magnetic plates (111; 111+131) laminated in said first direction (D1) and form said first surface to said third surface (11a, 11b, 11c; 11a, 13a, 11c+13c) in a state in which said plurality of second magnetic plates are respectively laminated; and
said at least one k-th point comprises two k-th points, where one of said two k-th points (42) is positioned in said second magnetic plate forming said first surface and the other of said two k-th points (40) is positioned in said second magnetic plate forming said second surface.

6. The armature core according to any one of Claims 2 to 4, wherein:
said first magnetic body (11) includes a plurality of second magnetic plates (111; 111+131) laminated in said first direction (D1) and form said first surface to said third surface (11a, 11b, 11c; 11a, 13a, 11c+13c) in a state in which said plurality of second magnetic plates are respectively laminated;
said extending part (121 a) is in contact with said first surface in said first direction; and
said at least one k-th point (40) is positioned in said second magnetic plate forming said second surface.

7. The armature core according to any one of Claims 2 to 4, wherein:
said second direction (D2) is a radial direction with said axis (P) being a center;
said N magnetic plates (121) include:
one end (121d) positioned on a side opposite to said extending part (121 a) in said first direction (D1); and
a slit (124) penetrating through itself in said second direction on the side opposite to said extending part in said first direction; and
said at least one k-th point is positioned at said one end.

8. The armature core According to any one of Claims 2 to 4, wherein:
said N magnetic plates (121) include:
one end (121d) positioned on a side opposite to said extending part (121 a) in said first direction (D1); and
a recessed part (125) positioned on the side opposite to said extending part in said first direction and being open toward said first magnetic body (11) side in a third direction (D2, D3) perpendicular to said axis; and
said at least one k-th point (40) is positioned at said one end.

9. The armature core according to Claim 8, wherein said hole (112) includes a second recessed part (113) fitted with said recessed part (125).

10. The armature core according to any one of Claims 2 to 4, wherein:
said second direction (D2) is a radial direction with said axis (P) being a center;
each of said N magnetic plates (121) includes:
one end positioned on a side opposite to said extending part (121a) in said first direction (D1); and
a first recessed part (126) being open toward the side opposite to said extending part at a center in a circumferential direction (D3) with said axis being a center, at said one end;
said hole (112) includes a second recessed part (114) fitted with said recessed part; and
said at least one k-th point is positioned at a boundary between said first recessed part and said second recessed part.

11. The armatures core according to any one of Claims 2 to 4, wherein:
said second direction (D2) is a radial direction with said axis being a center;
each of said N magnetic plates (121) includes:
one end positioned on a side opposite to said extending part (121a) in said first direction (D1); and
a projection (126) projecting toward the side opposite to said extending part at a center in a circumferential direction (D3) with said axis being a center, at said one end;
said projection is inserted through said hole (112); and
said at least one k-th point is positioned at said projection.

12. The armature core according to any one of Claims 2 to 4, wherein:
said hole (112) includes:
a first hole part (112a; 112) extending from said first surface (11a) along said first direction (D1);
a second hole part (112b; 132) extending from said first hole part along said first direction (D1) to reach said second surface (11b) and having a width smaller than a width of said first hole part in a third direction (D3) perpendicular to said first direction and said second direction (D2); and
a first recessed part (112c; 121g) being open toward said second surface side along said first direction at a boundary between said first hole part and said second hole part;
each of said N magnetic plates (121) includes in a portion inserted through said hole;
a second insertion part (121f) inserted through said second hole part; and
a second recessed part (121 g) fitted with said recessed part; and
said at least one k-th point (40) is positioned at a boundary between said second hole part and said second insertion part.

13. The armature core according to any one of Claims 2 to 4, wherein:
an armature coil is wound around said extending part (121a) with said first direction (D1) being an axis; and
said first magnetic body (11) includes a plurality of second magnetic plates (111; 111 +131) laminated in said first direction (D1), forming said first surface to said third surface (11a, 11b, 11c; 11a, 13a, 11c+13c) in a state in which said plurality of second magnetic plates are respectively laminated, and magnetically connecting said plurality of second magnetic bodies to each other.

14. The armature core according to any one of Claims 2 to 4, wherein said first magnetic body (11+13) includes:
a back yoke (11) forming said first surface (11a) and functioning as a yoke magnetically connecting said plurality of second magnetic bodies (12) to each other; and
a reinforcing plate (13) provided separately from said back yoke, mounted to face said back yoke in said first direction (D1), and forming said second surface (13b).

15. The armature core according to Claim 14, wherein said reinforcing plate is non-magnetic.

16. The armature core according to Claim 14, wherein:
said at least one k-th point (40) is positioned at the end on said second surface (11b) side of the point at which said edge of said boundary surface (122) and said third surface (11c) are close to each other; and
said back yoke is a dust core.

17. The armature core according to Claim 14, wherein:
said second direction (D2) is a radial direction with said axis (P) being a center;
each of said N magnetic plates (121) includes:
a back yoke insertion part (121e) inserted through a portion of said hole, the portion being provided in said back yoke (11); and
a reinforcing plate insertion part (121f) extending from a center of said back yoke insertion part in a circumferential direction with said axis being a center, having a width smaller than a width of said back yoke insertion part in said circumferential direction, and inserted through a portion of said hole, the portion being provided in said reinforcing plate (13); and
said at least k-th point is positioned at a boundary between said reinforcing plate insertion part and said reinforcing plate.

18. The armature core according to Claim 1, further comprising a reinforcing plate (13) including a fourth surface (13a) and a fifth surface (13b) facing each other in said first direction (D1) and mounted to said first magnetic body (11) with said second surface (11b) and said fourth surface facing each other.

19. The armature core according to Claim 18, wherein said reinforcing plate is non-magnetic.

20. The armature core according to Claim 18, wherein:
said first magnetic body (11) includes a plurality of second magnetic plates (111; 111+131) laminated in said first direction (D1) and forming said first surface to said third surface (11a, 11b, 11c; 11a, 13a, 11c+13c) in a state in which said plurality of second magnetic plates are respectively laminated; and
said reinforcing plate (13) includes a plurality of third magnetic plates laminated in said first direction (D1) and forming said fourth surface (13a) and said fifth surface (13b) in a state in which said plurality of third magnetic plates are respectively laminated.

21. The armature core according to Claim 18, wherein:
said first magnetic body (11) includes a plurality of second magnetic plates (111; 111+113) laminated in said first direction (D1) and forming said first surface to said third surface (11a, 11b, 11c; 11a, 13a, 11c+13c) in a state in which said plurality of second magnetic plates are respectively laminated; and
said reinforcing plate (13) has a width larger than a width of each of said plurality of second magnetic plates in said first direction.

22. The armature core according to any one of Claims 18 to 21, wherein:
said at least one k-th point (40) is positioned at an end on said second surface (11b) side of a portion at which said edge of said boundary surface (122) and said third surface are close to each other; and
said reinforcing plate (13) further includes a second hole (132) penetrating through said fourth surface (13a) and said fifth surface (13b) in said first direction (D1) and leading to said at least one k-th point (40).

23. The armature core according to any one of Claims 18 to 21, wherein:
said at least one k-th point (40) is positioned at an end on said second surface (11b) side of a portion at which said edge of said boundary surface (122) and said third surface are close to each other; and
said reinforcing plate (13) includes a second hole (134) provided in said fourth surface (13a) and covering said at least one k-th point (40).

24. The armature core according to any one of Claims 18 to 21, wherein:
each of said N magnetic plates (121) includes an extending part (121a) extending on a side opposite to said second surface (11b) from said hole (112) on said first surface (11a) side along said first direction (D1), around which an armature coil (16) is wound with said first direction being an axis in a state in which said N magnetic plates are laminated; and
a predetermined gap is provided between each of said N magnetic plates (121) and said reinforcing plate (13).

25. The armature core according to Claim 24, wherein said fourth surface (13a) is provided with a recessed part (135) open toward said second surface (11b) side in a region facing said plurality of second magnetic bodies (12) in said first direction (D1).

26. The armature core according to Claim 24, wherein each of said N magnetic bodies (121) includes an end on a side opposite to said extending part (121a) in said first direction (D1) and includes a recessed part (125) open toward said fourth surface (13a) side on said one end side.

27. The armature core according to any one of Claims 18 to 21, wherein said reinforcing plate (13) and said first magnetic body (11) each include a circular side surface with said axis (P) being a center, said reinforcing plate and said first magnetic body being welded to each other on said side surfaces.

28. The armature core according to any one of Claims 18 to 21, wherein said reinforcing plate (13) and said first magnetic body (11) are connected to each other with a caulking pin or a caulking bolt.

29. The armature core according to any one of Claims 2 to 4, wherein said second direction (D2) is a radial direction with said axis (P) being a center.

30. The armature core according to any one of Claims 2 to 4, wherein said second direction (D2) is a circumferential direction with said axis (P) being a center.

31. The armature core according to any one of Claims 1 to 4, wherein said N magnetic plates (111) each have the same shape.

32. The armature core according to any one of Claims 2 to 4, wherein:
said second direction (D2) is a radial direction with said axis (P) being a center; and
said extending part (121 a) included in each of said N magnetic plates (121) has a larger width in a circumferential direction with said axis being a center, toward said second direction.

33. The armature core according to any one of Claims 1 to 4, wherein:
each of said plurality of second magnetic bodies (12) has a rectangular shape in cross section perpendicular to said first direction (D1) at a position across said hole (112); and
a shape of said hole in said cross section also has said rectangular shape.

34. The armature core according to any one of Claims 1 to 4, wherein:
said first magnetic body (11) includes a plurality of second magnetic plates (111; 111+131) laminated in said first direction (D1) and forming said first surface to said third surface (11a, 11b, 11c; 11a, 13a, 11c+13e) and a circular fourth surface in a state in which said plurality of second magnetic plates are respectively laminated, said fourth surface connecting said first surface and said second surface with said axis being a center; and
said plurality of second magnetic plates are respectively welded to each other on said fourth surface.

35. The armature core according to any one of Claims 1 to 4, wherein:
said first magnetic body (11) includes a plurality of second magnetic plates (111; 111+131) laminated in said first direction (D1) and forming said first surface to said third surface (11a, 11b, 11c; 11a, 13a, 11c+13c) in a state in which said plurality of second magnetic plates are respectively laminated; and
said plurality of second magnetic plates are respectively connected to each other with a caulking pin or a caulking bolt.

36. The armature core according to any one of Claims 1 to 4, wherein a welding diameter at said at least one k-th point (40) is smaller than widths of said k-th and said (k+1)th ones of said magnetic plates (121) adjacent to each other in said second direction (D2).

37. The armature core according to any one of Claims 1 to 4, wherein:
said at least one k-th point (40) is positioned only on one side in said third direction (D3) perpendicular to said first direction (D1) and said second direction (D2), where k represents a natural number of any one of an odd number and an even number between 1 and N-2;
said at least one (k+1)th point is positioned only on the other side in said third direction; and
welding diameters of said k-th point and said (k+1)th point are smaller than double the widths of said k-th and said (k+1)th ones of said magnetic plates (121) in said first direction.

38. The armature core according to any one of Claims 1 to 4, wherein said at least one k-th point is welded by a laser.
